# EUROPÄISCHE PATENTSCHRIFT

(11) **EP 1 797 536 B1**
(45) Veröffentlichungstag und Bekanntmachung des Hinweises auf die Patenterteilung: **02.09.2009**
(21) Anmeldenummer: 05783863.3
(22) Anmeldetag: 15.09.2005
(51) Int. Cl.: G06T 9/00, H04N 7/36

(54) **CODIERSCHEMA FÜR EINEN EIN ZEITLICH VERAENDERLICHES GRAPHIKMODELL DARSTELLENDEN DATENSTROM**
CODING SCHEME FOR A DATA FLOW REPRESENTING A TEMPORALLY MODIFIABLE GRAPHIC MODEL
SCHEMA DE CODAGE POUR UN FLUX DE DONNEES REPRESENTANT UN MODELE GRAPHIQUE VARIABLE DANS LE TEMPS

(30) Priorität: 08.10.2004 DE 102004049156
(43) Veröffentlichungstag der Anmeldung: 20.06.2007
(73) Patentinhaber: Fraunhofer-Gesellschaft zur Förderung der angewandten Forschung e.V., 80686 München (DE)
(72) Erfinder: KAUTZNER, Matthias, 10551 Berlin (DE); MUELLER, Karsten, 12437 Berlin (DE); SMOLIC, Aljoscha, 10963 Berlin (DE); WIEGAND, Thomas, 10719 Berlin (DE)
(74) Vertreter: Schenk, Markus
(86) Internationale Anmeldenummer: PCT/EP2005/009937
(87) Internationale Veröffentlichungsnummer: WO 2006/039979

(56) Entgegenhaltungen:
- JINGHUA ZHANG ET AL: "Octree-based animated geometry compression" DATA COMPRESSION CONFERENCE, 2004. PROCEEDINGS. DCC 2004 SNOWBIRD, UT, USA MARCH 23-25, 2004, PISCATAWAY, NJ, USA,IEEE, 23. März 2004 (2004-03-23), Seiten 508-517, XP010692578 ISBN: 0-7695-2082-0 in der Anmeldung erwähnt
- YANG J-H ET AL: "COMPRESSION OF 3-D TRIANGLE MESH SEQUENCES BASED ON VERTEX-WISE MOTION VECTOR PREDICTION" IEEE TRANSACTIONS ON CIRCUITS AND SYSTEMS FOR VIDEO TECHNOLOGY, IEEE INC. NEW YORK, US, Bd. 12, Nr. 12, Dezember 2002 (2002-12), Seiten 1178-1184, XP001141949 ISSN: 1051-8215
- AHN JEONG-HWAN ET AL: "Motion-compensated compression of 3D animation models" ELECTRONICS LETTERS, IEE STEVENAGE, GB, Bd. 37, Nr. 24, 22. November 2001 (2001-11-22), Seiten 1445-1446, XP006017574 ISSN: 0013-5194
- MURAT TEKALP A ET AL: "FACE AND 2-D MESH ANIMATION IN MPEG-4" SIGNAL PROCESSING. IMAGE COMMUNICATION, ELSEVIER SCIENCE PUBLISHERS, AMSTERDAM, NL, Bd. 15, Januar 2000 (2000-01), Seiten 387-421, XP000885371 ISSN: 0923-5965
- "Information Technology - Coding of Audio-Visual Objects. Part 2: Visual; 2001 Edition" ISO/IEC JTC1/SC29/WG11, N4350, Juli 2001 (2001-07), XP002351966
- LENGYEL J E ED - SPENCER S N (ED): "COMPRESSION OF TIME-DEPENDENT GEOMETRY" PROCEEDINGS OF THE 1999 SYMPOSIUM ON INTERACTIVE 3D GRAPHICS. ATLANTA, GA, APRIL 26 - 28, 1999, PROCEEDINGS OF THE SYMPOSIUM ON INTERACTIVE 3D GRAPHICS, NEW YORK, NY : ACM, US, 26. April 1999 (1999-04-26), Seiten 89-95,226, XP001033619 ISBN: 1-58113-082-1
- TAO B ET AL: "GRADIENT-BASED RESIDUAL VARIANCE MODELING AND ITS APPLICATIONS TO MOTION-COMPENSATED VIDEO CODING" IEEE TRANSACTIONS ON IMAGE PROCESSING, IEEE SERVICE CENTER, PISCATAWAY, NJ, US, Bd. 10, Nr. 1, 1. Januar 2001 (2001-01-01), Seiten 24-35, XP000998878 ISSN: 1057-7149

## Beschreibung

Die vorliegende Erfindung bezieht sich auf die Codierung/Decodierung eines Datenstroms, der ein zeitlich veränderliches Graphikmodell darstellt, und insbesondere auf die Kompression solcher Graphikmodelldaten.

Zeitlich veränderliche 3D-Computergraphikmodelle finden heutzutage in der klassischen Computergraphik breite Anwendung. 3D-Computergraphikmodelle finden beispielsweise Anwendung bei Spielen, virtuellen Welten, Trickfilmproduktionen usw., aber auch in neueren Systemen, die als Free-Viewpoint-Video (FW) oder 3D-Videoobjekte (3DVO) bezeichnet werden.

3D-Computergraphikmodelle beschreiben die Oberfläche von 3D-Objekten in einem virtuellen 3D-Koordinatensystem. Hierzu werden die 3D-Koordinaten (x, y, z) einer gewissen Anzahl von Kontrollpunkten bzw. Vertices, die auf der Oberfläche liegen oder entlang derselben angeordnet sind, definiert. Die kontinuierliche Oberfläche wird durch unterschiedliche Ansätze der Parametrisierung definiert. Bei einer als Polygonmesh bezeichneten Parametrisierung wird die Form der Oberfläche von 3D-Objekten beispielsweise durch Polygone definiert, deren Eckpunkte die Kontrollpunkte bilden. Zur vollständigen Beschreibung eines Objekts gehört hier dann auch die Angabe der Konnektivität, d.h. die Angabe, welche Kontrollpunkte jeweils zu Polygongen zusammengefasst sind. Das vollständige 3D-Objekt entsteht dann durch Assoziation von Farbe, Textur und weiteren Merkmalen, wie z.B. Reflexion etc. Je nach verwendeter Oberflächenparametrisierung werden diese Merkmale der Konnektivität oder direkt der Punktrepräsentation zugeordnet.

Die übliche Repräsentation einer 3D-Geometrie ist somit die Angabe von 3D-Koordinaten von Kontrollpunkten in einer Liste mit oder ohne Angabe ihrer Konnektivität. Im Fall der oben genannten Polygonkonnektivität für ein Dreiecksmesh bilden beispielsweise jeweils drei Kontrollpunkte an den entsprechenden Listennummern ein Dreieck, die wiederum in einer Liste zusammengefasst werden. Die 3D-Koordinaten können als Float- bzw. Gleitkomma- oder Integer- bzw. Ganzzahlwerte vorliegen. Die Konnektivität besteht aus Integerwerten, nämlich der Angabe von Listennummern, an denen die entsprechenden Kontrollpunkte in der Liste angeordnet sind.

Zum Austausch und zur Übertragung der 3D-Geometrie zwischen verschiedenen Systemen und Anwendungen ist es wünschenswert, ein spezifiziertes Textformat zu verwenden, wie z.B. Virtual Reality Modelling Language (VRML), da dies das Parsen bzw. syntaktische Analysieren der 3D-Daten empfangsseitig sicherstellt.

Darüber hinaus ist es aber vor allem auch wünschenswert, die notwendige Datenmenge zur Codierung einer 3D-Geometrie zu reduzieren, um Übertragungsdatenrate und erforderlichen Speicherplatz zu reduzieren. Eine solche Verringerung lässt sich erzielen, wenn spezielle Kompressionsverfahren eingesetzt werden. Im Standard MPEG-4 wurde daher ein Verfahren zur Codierung der 3D-Geometrie statischer Objekte standardisiert, das als 3D-Mesh Coding (3DMC) bezeichnet wird. 3DMC ist ein binäres Format, das neben einer 30- bis 40-fachen Kompression gegenüber dem Textformat auch verbesserte Funktionalitäten für die Übertragung zur Verfügung stellt.

In einer Vielzahl von Anwendungen kommen aber dynamische, d.h. zeitlich veränderliche, 3D-Modelle vor. In der klassischen Computergraphik entstehen diese durch Animation, wobei häufig ein Operator das Modell für jeden Zeitpunkt neu erstellt. In neueren Methoden des FVV oder 3DVO entstehen dynamische Modelle durch die Rekonstruktion der 3D-Bewegung realer Objekte, die von mehreren Kameras aufgezeichnet werden. Es lassen sich grundsätzlich zwei Fälle dynamischer 3D-Modelle unterscheiden. Im ersten Fall bleibt die Topologie gleich, d.h. die Anzahl der Kontrollpunkte bzw. Vertices und die Konnektivität sind über die Zeit konstant. Es ändert sich lediglich die 3D-Position der Kontrollpunkte. Der zweite Fall stellt eine Verallgemeinerung dar. In diesem Fall sind auch Änderungen der Topologie zulässig.

In manchen Fällen lässt sich die zeitliche Änderung durch Animation beschreiben, d.h. dadurch, dass die Änderungen mittels eines zugrundegelegten physikalischen Bewegungsmodells beschrieben werden. Beispiele hierfür sind die Animation von menschlichen Gesichtern und Körpern, die auch in MPEG-4 bereits standardisiert sind, nämlich durch das sogenannte FBA-Verfahren (FBA = Face and Body Animation). Solche Animationsmodelle sind jedoch darin nachteilhaft, dass sie nicht auf einen allgemeinen Fall übertragbar sind, d.h. dass sie auf spezielle Bewegungsabläufe bzw. spezielle Objekte, wie z.B. Gesichter usw., eingeschränkt sind. Existiert kein Animationsmodell, so muss vielmehr für jeden Zeitpunkt ein neues 3D-Modell bzw. ein neues Mesh bzw.
Gitter aus Kontrollpunkten übertragen werden, das dann beispielsweise mit MPEG-4 3DMC für jeden Zeitpunkt codiert wird. Da es sich jedoch bei jedem Zeitpunkt um das gleiche Objekt in Bewegung handelt, enthalten diese Daten noch sehr viel zeitliche Redundanz, die zur weiteren Kompression genutzt werden könnte.

In J. Zhang und C.B. Owen, "Octree-based Animated Geometry Compression", DCC'04, Data Compression Conference, Snowbird, Utah, USA, S. 508 - 517, 23. - 25. März 2004, wird ein Verfahren zur Codierung zeitlich veränderlicher 3D-Modelle beschrieben, bei dem die zeitliche Änderung durch Prädiktion der Kontrollpunkte, Quantisierung des Prädiktionsfehlers bzw. der Bewegungsvektoren und Zusammenfassung von Bewegungsvektoren zu Gruppen beschrieben wird. Die Kompression, d.h. die Reduktion der Bitrate, erfolgt nach dem allgemeinen Prinzip der Differentialpulscodemodulation (DPCM = Differential Pulse Code Modulation). Auf diese Weise lassen sich für dynamische Modelle gegenüber 3DMC nochmals erhebliche Kompressionsgewinne erzielen, d.h. eine Bitrateneinsparung bei gleicher Qualität bzw. eine bessere Qualität bei gleicher Bitrate.

Mit dem zunehmenden Einsatz von 3D-Modellen in den unterschiedlichsten Anwendungsgebieten nimmt jedoch der Bedarf nach effektiveren Codierungsschemata für eine bessere Kompression dynamischer Modelle zu.

Die Aufgabe der vorliegenden Erfindung besteht deshalb darin, ein Codierungsschema zur Codierung/Decodierung eines Datenstroms, der ein zeitlich veränderliches Graphikmodell darstellt, zu schaffen, das höhere Kompressionsgewinne ermöglicht, d.h. eine Bitrateneinsparung bei gleicher Qualität oder eine bessere Qualität bei gleicher Bitrate.

Diese Aufgabe wird durch eine Vorrichtung gemäß Anspruch 1 oder 12 und ein Verfahren gemäß Anspruch 19 oder 20 gelöst.

Erfindungsgemäß umfasst eine Codierung eines Datenstroms, der ein zeitlich veränderliches Graphikmodell darstellt und eine Folge von Datenabschnitten aufweist, die Koordinatendaten aufweisen, die das Graphikmodell zu unterschiedlichen Zeitpunkten definieren, eine Prädiktion der Koordinatendaten eines aktuell zu codierenden ersten Datenabschnitts basierend auf Koordinatendaten eines zweiten, dem aktuell zu codierenden ersten Datenabschnitt vorausgehenden Datenabschnitts, um prädizierte Koordinatendaten für den ersten Datenabschnitt zu erhalten, sowie einen Vergleich der prädizierten Koordinatendaten für den ersten Datenabschnitt und der Koordinatendaten des ersten Datenabschnitts, um Prädiktionsfehlervektoren für den aktuell zu codierenden ersten Datenabschnitt zu erhalten. Anschließend erfolgt eine zweite Prädiktion, nämlich eine Prädiktion der Prädiktionsfehlervektoren für den ersten Datenabschnitt basierend auf bereits erhaltenen Prädiktionsfehlervektoren, um prädizierte Prädiktionsfehlervektoren für den ersten Datenabschnitt zu erhalten, woraufhin die prädizierten Prädiktionsfehlervektoren für den ersten Datenabschnitt und die Prädiktionsfehlervektoren für den ersten Datenabschnitt miteinander verglichen werden, um Prädiktionsfehlervektordifferenzen für den ersten Datenabschnitt zu erhalten.
Diese Prädiktionsfehlervektordifferenzen werden dann verarbeitet, um einen Teil eines codierten Datenstroms zu erhalten.

Eine Decodierung findet entsprechend umgekehrt statt. Ein codierter Datenstrom, der eine codierte Form des obigen Datenstroms darstellt und die codierten Prädiktionsfehlervektordifferenzen enthält, wird codiert, indem zunächst der kodierte Datenstrom verarbeitet wird, um decodierte Prädiktionsfehlervektordifferenzen zu erhalten. Prädiktionsfehlervektoren für einen aktuell zu decodierenden ersten Datenabschnitt werden basierend auf bereits decodierten Prädiktionsfehlervektordifferenzen prädiziert, um prädizierte Prädiktionsfehlervektoren für den ersten Datenabschnitt zu erhalten. Diese prädizierten Prädiktionsfehlervektoren werden mit Prädiktionsfehlervektordifferenzen des aktuell zu decodierenden ersten Datenabschnitts kombiniert, um Prädiktionsfehlervektoren für den ersten Datenabschnitt zu erhalten. Anschließend erfolgt eine zweite Prädiktion, nämlich die Prädiktion von Koordinatendaten des ersten Datenabschnitts basierend auf Koordinatendaten eines zweiten, dem ersten Datenabschnitt vorausgehenden Datenabschnitts, um prädizierte Koordinatendaten für den ersten Datenabschnitt zu erhalten, woraufhin die prädizierten Koordinatendaten für den ersten Datenabschnitt mit den Prädiktionsfehlervektoren für den ersten Datenabschnitt kombiniert werden, um die Koordinatendaten des aktuell zu dekodierenden ersten Datenabschnitts zu erhalten.

Die Erkenntnis der vorliegenden Erfindung besteht darin, dass das Einführen einer weiteren Prädiktionsstufe, nämlich einer Prädiktion der Bewegungsvektoren bzw. der Prädiktionsfehler der ersten Prädiktionsstufe, den Codier- bzw. Kompressions- und dementsprechend auch den Decodier- bzw. Dekompressionsaufwand zwar zunächst erhöht, dass aber bei den meisten Graphikmodellsequenzen aufgrund der Gleichförmigkeit der Bewegung diese Prädiktion zu einer im Verhältnis zum Aufwand erheblichen Verbesserung des Kompressionsgewinns führt.

Die Prädiktion der Prädiktionsfehlervektoren, d.h. die zweite Prädiktionsstufe, kann eine zeitliche Prädiktion und/oder eine örtliche Prädiktion umfassen. Genauer ausgedrückt können zur Prädiktion von Prädiktionsfehlervektoren eines aktuell zu codierenden Datenabschnitts sowohl die Prädiktionsfehlervektoren für einen dem aktuell zu codierenden Datenabschnitt vorausgehenden Datenabschnitt als auch die Prädiktionsfehlervektoren für den aktuell zu codierenden Datenabschnitt verwendet werden, letztere natürlich nur dann, wenn dieselben bereits vorliegen.

Gemäß einem speziellen Ausführungsbeispiel wird zur zeitlichen Prädiktion eines Prädiktionsfehlervektors basierend auf dem Prädiktionsfehlervektor eines vorhergehenden Datenabschnitts derjenige Prädiktionsfehlervektor dieses Datenabschnitts verwendet, der den Bewegungsvektor für dieselbe Koordinateninformation bzw. für denselben Kontrollpunkt darstellt.

Im Fall der örtlichen Prädiktion eines Prädiktionsfehlervektors basierend auf einem bereits erhaltenen Prädiktionsfehlervektor desselben Datenabschnitts wird zur Prädiktion derjenige Prädiktionsfehlervektor verwendet, der zu dem zu prädizierenden benachbart ist, was entweder auf der Basis von Konnektivitäts- bzw. Nachbarschaftsinformationen in dem Datenstrom oder durch geometrische Analyse festgestellt wird.

Stehen für einen zu prädizierenden Prädiktionsfehlervektor mehrere zeitlich/örtliche Prädiktoren bzw. prädizierte Prädiktionsfehlervektoren zur Verfügung, so wird der prädizierte Prädiktionsfehlervektor beispielsweise basierend auf dem Median all dieser Prädiktoren bestimmt.

Gemäß einem speziellen Ausführungsbeispiel der vorliegenden Erfindung werden die Prädiktionsfehlervektordifferenzen noch einem Clustering und einer anschließenden Skalierung/Quantisierung unterzogen, um die Bitrate zu reduzieren.

Gemäß einem speziellen Ausführungsbeispiel der vorliegenden Erfindung werden die Prädiktionsfehlervektordifferenzen abschließend binär arithmetisch codiert. Hierzu werden dieselben vorteilhafterweise zunächst binarisiert, d.h. in eine Form einer Folge von binären Entscheidungen bzw. Bins bzw. in eine Bitfolge gebracht. Die Bitfolge wird dann bin- bzw. bitweise binär arithmetisch codiert. Die binäre arithmetische Codierung kann basierend auf adaptiven Wahrscheinlichkeitsschätzungen und/oder einer statischen Wahrscheinlichkeitsschätzung arbeiten. Zudem ist es möglich, Kontextmodelle einzusetzen, d.h. die Adaption der Wahrscheinlichkeitsschätzung für die unterschiedlichen Bits bzw. Bins der Binarisierungen isoliert voneinander durchzuführen.

Um den Aufwand der binären arithmetischen Codierung einzugrenzen und trotzdem die Kompressionsrate möglichst hoch aufrechtzuerhalten, wird gemäß einem besonderen Ausführungsbeispiel der vorliegenden Erfindung die Binarisierung auf der Basis von zwei unterschiedlichen Binarisierungsschemata durchgeführt, wobei das erste Binarisierungsschema ausschließlich Verwendung findet, wenn das zu binarisierende Datum kleiner einem vorbestimmten Schwellwert ist, und, wenn das Datum größer als der Schwellwert ist, das erste Binarisierungsschema auf den Schwellwert angewendet wird, um ein Präfix zu erhalten, und das zweite Binarisierungsschema für den Rest des zu binarisierenden Datums verwendet wird. Anders ausgedrückt besteht die Binarisierung im erstgenannten Fall lediglich aus dem Präfix und in dem zweitgenannten Fall sowohl aus dem Präfix als auch aus dem Suffix. Gemäß dem speziellen Ausführungsbeispiel werden dann die Bits des Präfix mit einem adaptiven Wahrscheinlichkeitsmodell gegebenenfalls unter Kontextmodellierung, d.h. mit unterschiedlichen adaptiven Wahrscheinlichkeitsschätzungen für die einzelnen Bits, binär adaptiv codiert, während die Bits des Suffix mit einer statischen Wahrscheinlichkeitsschätzung binär arithmetisch codiert werden. Dies reduziert den Rechenaufwand für die arithmetische Codierung erheblich und sorgt bei geeigneter Wahl der Binarisierungsschemata für die Prädiktionsfehlervektordifferenzen für einen lediglich geringen Kompressionsratenverlust.

Bevorzugte Ausführungsbeispiele der vorliegenden Erfindung werden nachfolgend Bezug nehmend auf die beiliegenden Zeichnungen näher erläutert. Es zeigen:
- Fig. 1: ein Blockschaltbild eines Codierers gemäß einem Ausführungsbeispiel der vorliegenden Erfindung;
- Fig. 2: eine vereinfachte Ansicht eines Polygonmeshes;
- Fig. 3: ein Blockschaltbild der Cluster-Bildungseinrichtung von Fig. 1;
- Fig. 4: ein vereinfachtes Blockschaltbild des arithmetischen Codierers in Fig. 1;
- Fig. 5: ein Flussdiagramm zur Veranschaulichung der Funktionsweise der Binarisierungseinrichtung von Fig. 4;
- Fig. 6: eine Tabelle zur exemplarischen Veranschaulichung des Binarisierungsergebnisses nach Fig. 5;
- Fig. 7: ein Flussdiagramm zur Veranschaulichung der Funktionsweise der binären arithmetischen Codierungseinrichtung von Fig. 4; und
- Fig. 8: ein Blockschaltbild eines Decodierers, der zur Decodierung eines durch den Codierer von Fig. 1 erzeugten Datenstroms geeignet ist, gemäß einem Ausführungsbeispiel der vorliegenden Erfindung.

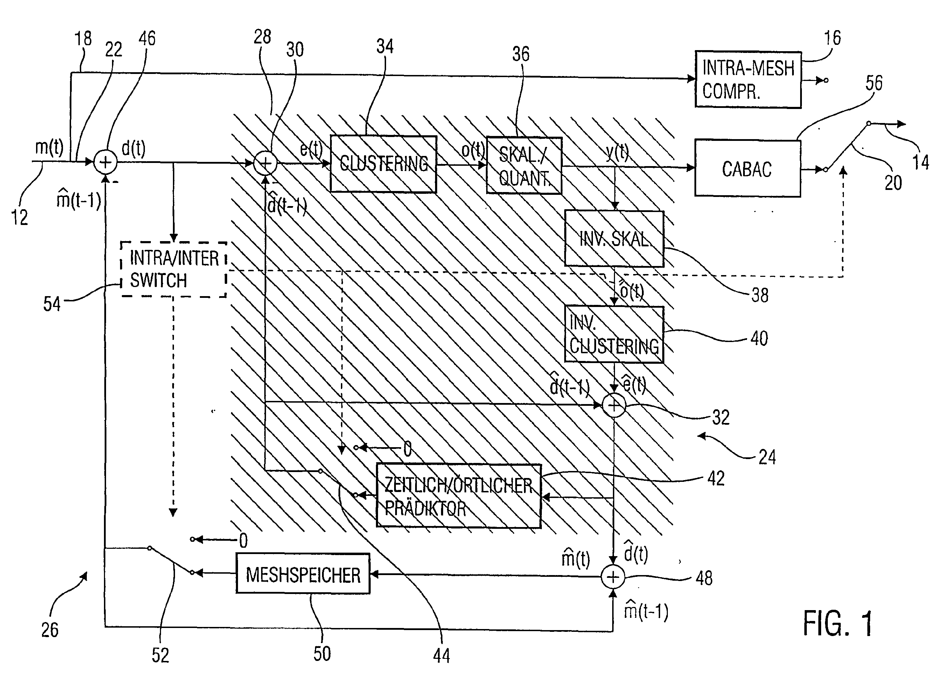

Fig. 1 zeigt einen Codierer zur Codierung eines ein zeitlich veränderliches Graphikmodell darstellenden Datenstroms gemäß einem Ausführungsbeispiel der vorliegenden Erfindung. Der Codierer, der allgemein mit 10 angezeigt ist, umfasst einen Eingang 12 zum Empfangen des zu codierenden Datenstroms und einen Ausgang 14 zum Ausgeben des codierten Datenstroms. Intern umfasst der Codierer 10 eine Intra-Codierungseinrichtung 16, die in einen Intra-Codierungspfad 18 geschaltet ist, der sich zwischen dem Eingang 12 und einem ersten Eingang eines Schalters 20 erstreckt. In einen parallel zu dem Intra-Pfad 18 verlaufenden Inter-Codierungspfad 22 ist der restliche Teil 24 des Codierers 10 geschaltet, der den Inter-Codierungsteil darstellt, d.h. denjenigen Teil des Codierers 10, der im Gegensatz zur Intra-Codierungseinrichtung 16, die die Codierung der Lage des Graphikmodells zu einem Zeitpunkt unabhängig von demjenigen Teil des Datenstroms vornimmt, der sich auf andere Zeitpunkte bezieht, die Codierung der Lage des Graphikmodells relativ zu einem Zeitpunkt abhängig von vorhergehenden Teilen des Datenstroms durchführt, die sich auf vorhergehende Zeitpunkte beziehen, wie es im Nachfolgenden noch deutlicher werden wird.

Der Inter-Codierungsteil 24 besteht aus zwei ineinander geschachtelten DPCM-Schleifen, nämlich einer äußeren Schleife 26, die für die Prädiktion von Vertices bzw.

Kontrollpunkten in dem Datenstrom am Eingang 12 verwendet wird, und einer inneren Schleife 28, die zur Prädiktion der Verschiebungsvektoren bzw. der Prädiktionsfehler der äußeren Schleife 26 zuständig ist.

Die innere Schleife 28 umfasst einen Vergleicher, nämlich eine Differenzbildungseinrichtung bzw. einen Differenzierer 30, einen Kombinierer, nämlich eine Addierungseinrichtung bzw. einen Addierer 32, eine Cluster-Bildungseinrichtung 34, eine Skalierungs-/Quantisierungseinrichtung 36, eine inverse Skalierungseinrichtung 38 als Pendant zur Skalierungs-/Quantisierungseinrichtung 36, eine inverse Cluster-Bildungseinrichtung bzw. Cluster-Auflösungseinrichtung 40 als Pendant zur Cluster-Bildungseinrichtung 34, eine Prädiktionseinrichtung 42 zur zeitlichen oder örtlichen Prädiktion und einen Schalter 44.

Die äußere Schleife 26 überschneidet sich mit der inneren Schleife 28 bezüglich der Komponenten 30 - 40 und umfasst zusätzlich hierzu einen Vergleicher bzw. eine Vergleichseinrichtung, nämlich einen Differenzierer 46, und einen Kombinierer bzw. eine Kombinationseinrichtung, nämlich einen Addierer 48, sowie einen Speicher bzw. Meshspeicher 50 und einen Schalter 52.

Der Inter-Codierungsteil 24 umfasst ferner eine als Intra/Inter-Switch bezeichnete Steuereinrichtung 54 sowie eine Codierungseinrichtung 56 zur arithmetischen Codierung.

Hinsichtlich der internen Verschaltung der Komponenten sind der Differenzierer 46, der Differenzierer 30, die Cluster-Bildungseinrichtung 34, die Skalierungs-/Quantisierungseinrichtung 36 und die Codierungseinrichtung 56 in Reihe in den Inter-Codierungspfad 22 zwischen Eingang 12 und Schalter 20 geschaltet. Der Schalter 20 ist durch die Steuereinrichtung 54 steuerbar, um steuerbar entweder den Intra-Pfad 18 oder den Inter-Pfad 22 mit dem Ausgang 14 zu verbinden.

Zwischen dem Ausgang der Skalierungs-/Quantisierungseinrichtung 36 und dem Eingang der Codierungseinrichtung 56 zweigen die Schleifen 26 und 28 in Form einer Serienschaltung aus inverser Skalierungseinrichtung 38, inverser Cluster-Bildungseinrichtung 40 und Addierer 32 ab. Insbesondere ist ein erster Eingang des Addierers 32 mit einem Ausgang der inversen Cluster-Bildungseinrichtung 40 verbunden, während ein Ausgang des Addierers 32 mit einem Eingang der Prädiktionseinrichtung 42 der inneren Schleife 28 verbunden ist. Der Schalter 44 umfasst zwei Eingänge, nämlich einen, der mit einem Ausgang der Prädiktionseinrichtung 42 verbunden ist, und einen weiteren, an dem logische Nullen als Prädiktionsersatz für die Verschiebungsvektoren anliegen. Der Schalter 44 wird durch die Steuereinrichtung 54 gesteuert und ermöglicht es derselben, entweder den Ausgang der Prädiktionseinrichtung 42 oder die logischen Nullen an einen invertierenden Eingang des Differenzierers 30 anzulegen. Mit dem nichtinvertierenden Eingang ist der Differenzierer 30 mit einem Ausgang des Differenzierers 46 verbunden. Der Ausgang des Schalters 44 ist nicht nur mit dem invertierenden Eingang des Differenzierers 30 verbunden sondern ferner mit einem weiteren Eingang des Addierers 32.

Der Ausgang des Addierers 32 ist ferner mit einem Eingang des Addierers 48 verbunden, dessen Ausgang wiederum mit einem Eingang des Speichers 50 verbunden ist. Der Schalter 52 umfasst zwei Eingänge, von denen der eine mit dem Ausgang des Speichers 50 und der andere mit einem Anschluss verbunden ist, an dem logische Nullen als Ersatz für prädizierte Kontrollpunkte anliegen. Der Schalter 52 wird durch die Steuereinrichtung 54 gesteuert und ermöglicht es derselben, entweder die logischen Nullen oder den Inhalt des Speichers 50 an einen invertierenden Eingang des Differenzierers 46 und einen weiteren Eingang des Addierers 48 anzulegen. Ein nichtinvertierender Eingang des Differenzierers 46 ist über den Inter-Pfad 22 mit dem Eingang 12 verbunden.

Nachdem im Vorhergehenden der Aufbau des Codierers 10 beschrieben worden ist, wird im folgenden dessen Funktionsweise beschrieben.

Der am Eingang 12 eingehende Datenstrom stellt ein zeitlich veränderliches Graphikmodell dar. Anders ausgedrückt besteht der eingehende Datenstrom aus einer Folge von Datenabschnitten, die die Kontrollpunkte bzw. Koordinatendaten aufweisen, die das Graphikmodell zu unterschiedlichen Zeitpunkten definieren. Wie sich die Oberfläche eines Modells schließlich aus den Kontrollpunkten definiert, hängt von der zugrundeliegenden Parametrisierung ab. Je nach Parametrisierung können den Kontrollpunkten ferner Konnektivitätsinformationen zugewiesen sein, die unter denselben Nachbarschaftsbeziehungen festlegen und zur vollständigen Festlegung bzw. Parametrisierung des Modells erforderlich sind.

Es gibt durchaus unterschiedliche Ansätze der Parametrisierung. Im folgenden soll aber exemplarisch davon ausgegangen werden, dass es sich bei der Parametrisierung um eine Polygonmesh-Parametrisierung handelt. Nach der Polygonmesh-Parametrisierung ist die Form der Oberfläche des Graphikmodells bzw. des 3D-Objektes durch Polygone definiert, deren Eckpunkte die Kontrollpunkte bilden. Die einfachste Form der Oberflächenpolygone sind dabei planare Dreiecksflächen. Zur vollständigen Beschreibung eines Objekts ist die Angabe der Konnektivität notwendig, d.h. welche Kontrollpunkte jeweils zu Polygonen zusammengefasst werden, wobei diese Konnektivitätsinformationen, wie bereits erwähnt, in dem eingehenden Datenstrom enthalten sind. Kontrollpunkte und Konnektivität beschreiben zusammen die Geometrie der Objekte.

Die Kontrollpunkte, die die Oberfläche des Graphikmodells zu einem gewissen Zeitpunkt definieren, sind in einem Datenabschnitt enthalten. Die Konnektivitätsinformationen könnten für jeden Datenabschnitt bzw. für jeden Zeitpunkt neu übertragen werden, sind aber vorzugsweise in dem Datenstrom 12 lediglich in denjenigen Datenabschnitten vorhanden, an denen sich die Topologie bzw. die Konnektivitätsinformationen im Datenstrom ändert.

Ein Spezialfall der Polygonmesh-Parametrisierung sind sogenannte regelmäßige rechteckige Gitter, sogenannte Elevation-Grids bzw. Höhengitter, die bezüglich einer beliebig im Raum liegenden Ebene definiert sind. Dabei geben zwei der drei Koordinaten (x, y, z) der Kontrollpunkte die örtliche Position der Kontrollpunkte im Gitter an, während die verbleibende dritte Koordinate die senkrechte Abweichung des Punktes von der Ebene bzw. die Tiefe des Punktes in Bezug auf die Ebene angibt.

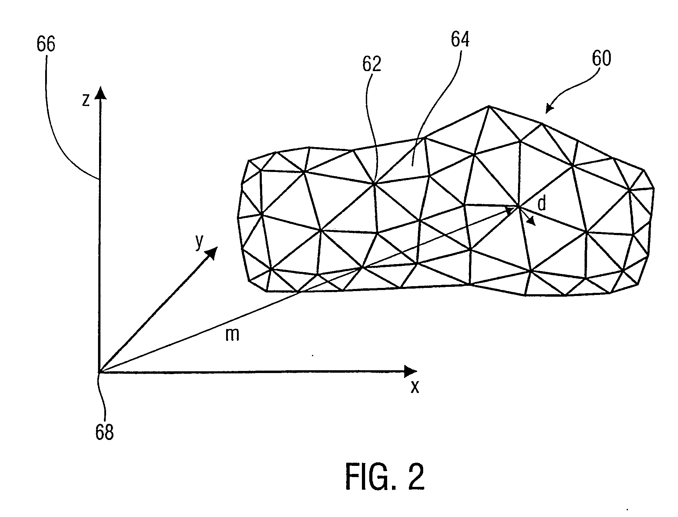

Um die nachfolgende Erörterung der Funktionsweise des Codierers 10 von Fig. 1 deutlicher veranschaulichen zu können, wird - wie bereits erwähnt - im Folgenden davon ausgegangen, dass dem Datenstrom am Eingang 12 die Polygonmesh-Parametrisierung zugrunde liegt. Fig. 2 zeigt exemplarisch in Raumdarstellung ein Graphikmodell 60 in Polygonmesh-Parametrisierung zu einem beliebigen Zeitpunkt. Der diesen Zeitpunkt definierende Datenabschnitt des eingehenden Datenstroms sowie die durch diesen Datenabschnitt definierte Lage des sich verändernden Graphikmodells wird im folgenden manchmal auch als Mesh bzw. Gitter bezeichnet, in Anlehnung an das Gitter, das sich ergibt, wenn die Kontrollpunkte gemäß den Konnektivitätsinformationen mit Verbindungslinien miteinander verbunden werden, wie es in Fig. 2 zu sehen ist. Ein Mesh umfasst die sich auf der Oberfläche des Objekts 60 befindlichen Kontrollpunkte 62. Zusätzlich enthält der Datenstrom 12 entweder in dem Datenabschnitt selbst oder einem vorhergehenden Datenabschnitt Konnektivitätsinformationen, die angeben, welche drei der Kontrollpunkte 62 zu einem Polygon 64, hier Dreieck, gehören. Die Kontrollpunkte 62 sind in Fig. 2 an den Schnittpunkten der Linien des Graphikmodells 60 erkennbar, wohingegen die Polygone bzw. Dreiecke durch diese Linien umschrieben werden.

Die Kontrollpunkte werden in der folgenden Beschreibung mit mᵢ(t) bezeichnet, wobei der Index i die dem jeweiligen Kontrollpunkt 62 eindeutig zugewiesene Listennummer sei und t den Zeitpunkt angebe, zu dem sich dieser Kontrollpunkt an der Position mᵢ(t) befinde. Anders ausgedrückt ist mᵢ(t) ein Vektor, der die Lage des Kontrollpunkts i bezüglich eines Koordinatensystems 66 mit einem vorbestimmten Ursprung 68 definiert. Die Gesamtheit aller Kontrollpunkte i, die das Graphikmodell zu einem Zeitpunkt t definieren, wird im folgenden auch manchmal als m(t) bezeichnet. Mit m(t-1) wird die Gesamtheit der Kontrollpunkte bezeichnet, die das Graphikmodell zu einem Zeitpunkt t-1 definieren, d.h. zu einem Zeitpunkt unmittelbar vor dem Zeitpunkt t, mit m(t-2) die Gesamtheit der Kontrollpunkte, die das Graphikmodell zu einem Zeitpunkt t-2 definieren, usw. Das 3D-Modell m(t) zum Zeitpunkt t sei das gerade zu komprimierende.

Wenn nun am Eingang 12 der Datenstrom eintrifft, trifft zunächst der erste Datenabschnitt ein, der das Graphikmodell zum ersten Zeitpunkt t = 0 definiert. In dieser Situation fehlen dem Codierer 10 jegliche Vorinformationen über das Graphikmodell. Anders ausgedrückt ist dieses Modell dann noch nicht vorverarbeitet worden und der Meshspeicher 50 ist noch leer. In dieser Situation kann der Inter-Codierungsteil 24 keine Prädiktion durchführen. Die Steuerung 54 stellt deshalb in diesem Fall den Schalter 20 zunächst derart ein, dass eine durch die Intra-Codierungseinrichtung 16 erzeugte statische Codierung des Datenabschnitts zum Zeitpunkt t = 0 bzw. der Kontrollpunkte m(t) und der gegebenenfalls zugehörigen Konnektivitätsinformationen in den codierten Datenstrom 14 eingekoppelt wird. Die statische Codierung ist beispielsweise eine 3DMC aus MPEG-4. Eine statische Codierung eines Datenabschnitts soll bedeuten, dass die Codierung dieses Zeitabschnitts bzw. der Kontrollpunkte m(t=0) in diesem Datenabschnitt isoliert codiert wird, d.h. ohne Abhängigkeit von anderen Daten in dem Datenstrom, so dass auch das Dekodierungsergebnis dieses Datenabschnittes unabhängig von einer Kenntnis des Inhalts der anderen Datenabschnitte erfolgen kann.

Zu diesem Zeitpunkt, da die Steuerung 54 den Schalter 20 ansteuert, um den Intra-Pfad 18 auf den Ausgang 14 durchzuschalten, steuert die Steuereinrichtung 54 die Schalter 44 und 52 an, um jeweils den Prädiktionsersatz, nämlich die logische Null, an die invertierenden Eingänge der Differenzierer 46 und 30 anzulegen. Während somit die Intra-Codierungseinrichtung 16 die statische Codierung der Kontrollpunkte m(t=0) durchführt, gelangen die Kontrollpunkte m(t=0) unverändert an den Eingang der Cluster-Bildungseinrichtung 34, wo sie einer im Folgenden noch näher erörterten Gruppenbildung unterzogen werden, um die Anzahl der Vektoren zu verringern. Die gegebenenfalls an Zahl dezimierten Vektoren werden dann in der Skalierungs-/Quantisierungseinrichtung 36 - natürlich unter Informationsverlust - skaliert und quantisiert, in der inversen Skalierungseinrichtung 38 wieder zurückskaliert und dann wieder in der Gruppenauflösungseinrichtung 40 zu Kontrollpunkten m (t) aufgespalten, von wo aus sie an den Eingang des Meshspeichers 50 gelangen, um zum nächsten Zeitpunkt t+1 als prädizierte Kontrollpunkte bzw. eine Prädiktion der Kontrollpunkte zu dienen.

Diese Schalterstellung, nämlich Schalter 20, 44 und 52 auf die obere Schalterstellung in Fig. 1, wird durch die Steuerung 54 nicht nur für das erste zu codierende Mesh, d.h. zum Zeitpunkt t = 0, vorgenommen, sondern ferner wenn
- eine Änderung des Szenen- oder Objektinhalts eintritt, was die Steuerung 54 beispielsweise aus Seiteninformationen in dem Datenstrom 12 ableitet,
- eine Topologieänderung des Modells auftritt, was die Steuerung 54 beispielsweise ferner anhand von Seiteninformationen in dem Datenstrom 12, wie z.B. anhand von neu übertragenen Konnektivitätsinformationen, neu übertragenen Konnektivitätsinformationen, feststellt, wodurch der Codierer 10 bzw. das entsprechende Codierverfahren allgemein für alle Arten von Modellen einsetzbar ist, oder
- der Rekonstruktionsfehler der äußeren Schleife 26 zu groß wird, d.h. der Unterschied zwischen originalem und decodiertem Modell bzw. der Unterschied zwischen den aktuell zu codierenden Kontrollpunkten m(t) und den in dem Speicher 50 vorliegenden Kontrollpunkten m̂(t-1) zu groß wird.

Zur Feststellung der Rekonstruktionsfehler ist die Steuerung 54 ebenfalls mit dem Ausgang des Differenzierers 46 verbunden.

Die Schalterstellung, bei denen die Schalter 20, 44 und 52 in der oberen Schalterstellung vorliegen, wird deshalb als Intra-Modus des Codierers 10 bezeichnet, da keine Prädiktion vorgenommen wird.

Im Folgenden wird demgegenüber die Funktionsweise des Codierers 10 während des Inter-Modus beschrieben. In diesem Modus werden die Schalter 20 und 52 durch die Steuerung 54 derart angesteuert, dass sich die Schalter 20 und 52 in der unteren Schalterstellung befinden, d.h. der Inter-Pfad 22 mit dem Ausgang 14 verbunden und der Ausgang des Speichers 50 mit dem invertierenden Eingang des Differenzierers 46 verbunden ist. Die Einstellung des Schalters 44 erfolgt Bewegungsvektorweise, wie es im folgenden beschrieben wird, so dass alternativ entweder der Ausgang der Prädiktionseinrichtung 42 oder die Prädiktionsersatznull mit dem invertierenden Eingang des Differenzierers 30 verbunden ist.

Im Inter-Modus wird eine weitere Kompression erzielt, indem zunächst durch die äußere Schleife 26 zeitliche Redundanz durch Prädiktion reduziert wird, und dann zeitliche und/oder örtliche Redundanz durch eine zeitliche und/oder örtliche Prädiktion der inneren Schleife 28 reduziert wird, wie es im Folgenden näher beschrieben wird.

Wie es aus der vorhergehenden Beschreibung des Intra-Modus hervorging, befindet sich nach der Durchführung eines solchen Intra-Modus für einen Datenabschnitt, der sich auf den Zeitpunkt t bezieht, in dem Speicher 50 eine Kopie des Meshes zu diesem Zeitpunkt t umfassend die Kontrollpunkte m̂(t), die von der ursprünglichen Version der Kontrollpunkte m(t) lediglich durch die Quantisierung in der Quantisierungseinrichtung 36 abweichen. Falls nun der nächste Datenabschnitt zum Zeitpunkt t+1 ein Mesh mit der gleichen Topologie ist, d.h. Kontrollpunkte m(t+1), die auf gleiche Konnektivitätsinformationen bezogen sind wie die Kontrollpunkte m(t), aufweist, ist eine Prädiktion in der äußeren Schleife 26 möglich.

Betrachtet werde nun der Fall, dass am Eingang 12 Kontrollpunkte m(t) für ein Mesh mit einer Topologie eintreffen, die gleich ist zu einer Topologie des vorhergehenden Meshes zum Zeitpunkt t-1. Das entsprechende rekonstruierte Mesh für den Zeitpunkt t-1 befindet sich dann in Form von Kontrollpunkten m̂(t-1) in dem Speicher 50 und wird über den Schalter 52, der von der Steuerung 54 auf die untere Schalterstellung eingestellt wird, an den invertierenden Eingang des Differenzierers 46 angelegt. Der Differenzierer 46 bildet dann die Differenz zwischen den Kontrollpunkten m(t) und den rekonstruierten Kontrollpunkten m̂(t-1), wodurch sich am Ausgang des Differenzierers 46 Verschiebungsvektoren d(t) ergeben, die den Prädiktionsfehler der äußeren Prädiktionsschleife 26 darstellen. Vom Ausgang des Differenzierers 46 zum Eingang des Differenzierers 30 werden somit nicht Vertices selbst übertragen, sondern Verschiebungsvektoren d(t). Diese Verschiebungsvektoren d(t) beschreiben genauer ausgedrückt die Differenz der einzelnen Koordinaten in x, y, z (siehe Fig. 2) jedes einzelnen Kontrollpunktes i zwischen dem aktuell zu übertragenden Mesh zum Zeitpunkt t und dem zuvor rekonstruierten Mesh zum Zeitpunkt t-1, d.h. dᵢ(t) = mᵢ(t) - mᵢ(t-1) für alle i zwischen 1 bis N, wobei N die Anzahl der Kontrollpunkte in den Meshes zum Zeitpunkt t und t-1 angebe, die ja die gleiche Topologie und somit auch die gleiche Anzahl von Vertices aufweisen, während der Inter-Modus vorliegt.

Durch die innere Prädiktionsschleife 28 werden nun die Verschiebungsvektoren d(t) aus zuvor übertragenen Verschiebungsvektoren bzw. Verschiebungsvektoren, die aus zuvor übertragenen Kontrollpunkten hergeleitet wurden, vorhergesagt. Diese zweite Prädiktion ist nicht für alle Verschiebungsvektoren dᵢ(t) möglich. Für einen speziellen Verschiebungsvektor dᵢ(t) ist eine zeitliche Prädiktion bzw. Vorhersage möglich, falls bereits mehr als ein Mesh mit gleicher Topologie wie des aktuelle Mesh übertragen wurde. Dann wurden nämlich für jeden Vertex i bereits mindestens Koordinateninformationen mᵢ(t-2) und mᵢ(t-1) am Eingang 12 empfangen, aus denen, wie es noch beschrieben werden wird, ein prädizierter Verschiebungsvektor d(t-1) hergeleitet und an den invertierenden Eingang des Differenzierers 30 angelegt werden konnte, der dann somit zur Vorhersage dient. Eine solche zeitliche Prädiktion verspricht vor allem deshalb Gewinne, da sich die Bewegung von Objekten über die Zeit im allgemeinen nicht abrupt ändert und somit eine Vorhersage der Bewegung aus bekannter Bewegung möglich ist bzw. die entstehenden Bewegungsvektordifferenzen klein und somit mit geringrer Rate komprimierbar sind. Die zeitliche Prädiktion wird im Folgenden noch detaillierter beschrieben und durch die Prädiktionseinrichtung 42 durchgeführt.

Eine örtliche Prädiktion kann durch die Einrichtung 42 ebenfalls durchgeführt werden, und zwar falls bereits mindestens ein Kontrollpunkt mᵢ(t) des gerade verarbeiteten Meshes t übertragen wurde. Zu diesem Kontrollpunkt i ist dann nämlich auch bereits die Information mᵢ(t-1) eingetroffen und, wie es im folgenden noch beschrieben wird, der Verschiebungsvektor dᵢ(t) in der Prädiktionseinrichtung 42 verfügbar. Es ist nämlich die Annahme gerechtfertigt, dass allen örtlichen Nachbarn j zu diesem Kontrollpunkt i Verschiebungsvektoren dⱼ(t) zugeordnet sind, die ungefähr den gleichen Wert aufweisen wie di(t), da sich die Bewegung über ein Objekt nicht abrupt ändert. Deshalb können diese Werte d̂ⱼ(t) der Nachbarvertex j als örtliche Prädiktoren für dᵢ(t) bzw. umgekehrt d̂ᵢ(t) als örtlicher Prädiktor für die Werte dⱼ(t) verwendet werden. Örtliche Nachbarn j zu einem aktuellen Vertex i bzw. einem zugehörigen Bewegungsvektor dᵢ(t) können hierbei von der Prädiktionseinrichtung 42 beispielsweise dadurch ermittelt werden, dass sie mit dem aktuell zu codierenden Vertex i räumlich verbunden sind, d.h. je nach Art der Oberflächenparametrisierung beispielsweise ein Polygon in einem Polygonmesh bilden, benachbarte Kontrollpunkte einer approximierenden Polygonfunktion sind, oder in irgendeiner Form räumliche Nachbarn von Vertex i entlang der Oberfläche oder Geometrie des Graphikmodells sind. Diese Information wird beispielsweise aus der Topologiebeschreibung des 3D-Modells gewonnen oder durch geometrische Überprüfungen. Es können sogar die Verschiebungsvektoren dⱼ(t) aller bereits übertragenen örtlichen Nachbarn j des aktuellen Meshes zur Prädiktion verwendet werden.

Letztendlich wird der Prädiktor d̂ᵢ(t-1) für den Verschiebungsvektor dᵢ(t) des aktuellen Vertex i aus der Gesamtheit der zur Verfügung stehenden örtlichen und zeitlichen Vorhersagevektoren ermittelt. Hierzu wird ein Medianfilter eingesetzt, d.h. die Einrichtung 42 wählt unter den zur Verfügung stehenden Prädiktionsvektoren in einer Anordnung, da dieselben ihrer Länge nach geordnet sind, im Falle einer ungeraden Anzahl von Prädiktionsvektoren den mittleren und in dem Falle einer geraden Anzahl von Prädiktoren beispielsweise den Mittelwert der beiden mittleren Prädiktionsvektoren als schließlich und endlichen Vorhersagevektor aus. Liegt beispielsweise neben einem zeitlich prädizierten Verschiebungsvektor d̂ᵢ(t-1) ein Satz von vier örtlich prädizierten Verschiebungsvektoren d̂ⱼ(t) mit j ∈ {Nachbar von i} vor, so wählt die Prädiktionseinrichtung 42 aus diesem Satz von fünf Prädiktionsvektoren den dritten aus, wenn diese der Länge nach angeordnet sind.

Anstelle der Verwendung einer Medianfilterung wäre auch die Verwendung einer Mittelwertbildung oder dergleichen möglich.

Schließlich bildet der Differenzierer 30 die Differenz zwischen den Prädiktoren d̂(t-1) bzw. prädizierten Verschiebungsvektoren und den Verschiebungsvektoren d(t), wie sie von dem Differenzierer 46 übertragen werden, nämlich den Verschiebungsvektoren des aktuellen Meshes. Das Ergebnis sind Verschiebungsvektordifferenzen e(t), wobei pro Vertex i eine Verschiebungsvektordifferenz eᵢ(t) gebildet wird. Es sei darauf hingewiesen, dass eine Verschiebungsvektordifferenz eᵢ(t) bei Nicht-Vorliegen eines Prädiktors dem Bewegungsvektor dᵢ(t) entspricht.

Die im Vorhergehenden beschriebene Prädiktion durch die innere Schleife 28, nämlich die Prädiktion der Verschiebungsvektoren, zusammen mit der weiteren Verarbeitung der Verschiebungsvektordifferenzen e(t) stellt einen entscheidenden Unterschied zu und Vorteil gegenüber dem in der Beschreibungseinleitung beschriebenen Verfahren dar, bei dem vielmehr lediglich die Vertices selbst prädiziert und die entstehenden Verschiebungsvektoren weiter verarbeitet werden.

Die Funktionsweise der Prädiktion der inneren Schleife 28 wurde im Vorhergehenden eher allgemein für alle in die Schleife 28 eingehenden Verschiebungsvektoren d(t) beschrieben. Bei etwas genauerer Betrachtung der einzelnen Verschiebungsvektoren dᵢ(t) zu den einzelnen Vertices i ist aber darauf hinzuweisen, dass nicht für jeden Verschiebungsvektor dᵢ(t) ein Prädiktor vorliegen muss. Denn wie aus der vorhergehenden Beschreibung deutlich wurde, fehlen für alle Verschiebungsvektoren d(t) zu einem Zeitpunkt t, der einem Intra-Modus zum Zeitpunkt t-1 unmittelbar vorangeht, notwendige Informationen, um einen prädizierten Verschiebungsvektor d̂(t-1) zu bilden, wozu ja auch Kontrollpunktinformationen für den Vertex zum Zeitpunkt t-2 vorliegen müssten. Zusätzlich oder alternativ kann es sein, dass ein örtlicher Prädiktor fehlt, da der zu prädizierende Verschiebungsvektor dᵢ(t) auf einen Vertex i bezogen ist, für dessen Nachbarn j noch keine Verschiebungsvektoren dⱼ(t) bzw. Kontrollpunkte mⱼ(t) aus dem Datenstrom am Eingang 12 erhalten worden bzw. ableitbar sind. In diesem Fall, da weder zeitlicher noch örtlicher Prädiktor zu einem Verschiebungsvektor dᵢ(t) durch die Prädiktionseinrichtung 42 geliefert werden kann, stellt die Steuereinrichtung 54 deshalb den Schalter 44 auf die obere Schalterstellung ein. Andernfalls wird der Schalter auf die untere Schalterstellung in Fig. 1 eingestellt. Anders ausgedrückt steuert die Steuereinrichtung 54 den Schalter 44 während des Intra-Modus für jeden Verschiebungsvektor d(t) einzeln abhängig von dem Vorhandensein eines Prädiktors.

Ferner wurde bei der vorhergehenden Beschreibung der Teil der Schleifen 28 und 26 ignoriert, der sich zwischen dem Ausgang des Differenzierers 30 und dem Eingang des Addierers 32 befindet. Die Bedeutung dieses Teils wird im Folgenden beschrieben, wobei darauf hingewiesen wird, dass bei dieser genaueren Beschreibung dieses Teils davon ausgegangen wird, dass die Prädiktionseinrichtung 42 lediglich eine zeitliche Prädiktion durchführt, d.h. eine Prädiktion der eintreffenden Verschiebungsvektoren dᵢ(t) basierend auf den vorangehenden Verschiebungsvektoren dᵢ(t-1) bzw. den Kontrollpunkten zu den beiden vorhergehenden Zeitpunkten, d.h. mᵢ(t-1) und mᵢ(t-2).

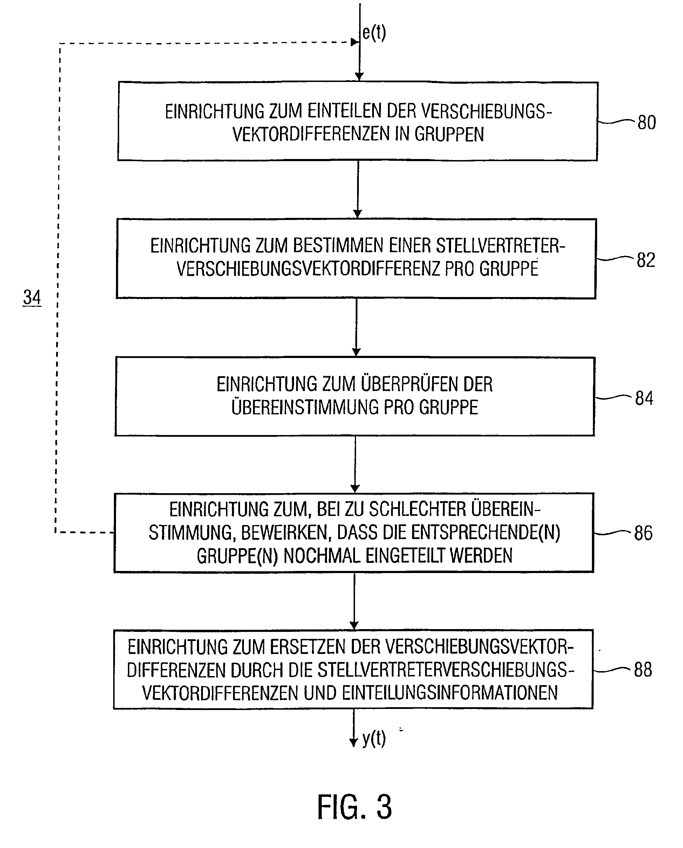

Die Cluster-Bildungseinrichtung 34 empfängt die Verschiebungsvektordifferenzen e(t) für das aktuell zu codierende Mesh zum Zeitpunkt t. Die Cluster-Bildungseinrichtung 34, deren Funktionsweise im Folgenden Bezug nehmend auf Fig. 3 detaillierter erörtert werden wird, nimmt eine Zusammenfassung ähnlicher und benachbarter Verschiebungsvektordifferenzen vor, wie z.B. nach einem Octree-Algorithmus. Anders ausgedrückt ersetzt die Cluster-Bildungseinrichtung 34 die Verschiebungsvektordifferenzen e(t) durch einen Satz von Stellvertreterverschiebungsvektordifferenzen o(t), dessen Anzahl an Stellvertreterverschiebungsvektordifferenzen kleiner als die Anzahl von Verschiebungsvektordifferenzen e(t) ist. Als Resultat ist die Anzahl der zu übertragenden Werte verringert, nämlich der Koordinaten der einzelnen Vektordifferenzen. die Stellvertreterverschiebungsvektordifferenzen o(t) werden dann in der Skalierungs-/Quantisierungseinrichtung 36 skaliert und quantisiert, wodurch sich quantisierte Vektoren y(t) ergeben. Diese werden wiederum der Codierungseinrichtung 56 zugeführt, die dieselben arithmetisch codiert, wie es im Folgenden noch näher beschrieben werden wird. Die derart codierten und komprimierten Werte y(t) werden in den codierten Datenstrom am Ausgang 14 eingekoppelt.

Zur Schließung der beiden DPCM-Schleifen 26 und 28 wird am Decoder 10 das Ausgangssignal m(t) anhand der quantisierten Vektoren y(t) wieder rekonstruiert, wobei alle bisherigen Schritte des Codierers, nämlich die Differenzbildung in den Differenzierern 46 und 30, die Cluster-Bildung in der Einrichtung 34 und die Skalierung in der Skalierungs-/Quantisierungseinrichtung 36, rückgängig gemacht bzw. invers durchgeführt werden. Dementsprechend skaliert die inverse Skalierungseinrichtung 38 die Vektoren y(t) mit einem zu dem von der Skalierungseinrichtung 36 verwendeten Skalierungsfaktor inversen Skalierungsfaktor, wodurch sich ein rekonstruierter Satz von Stellvertreterverschiebungsvektordifferenzen ô(t) ergibt. Dieser Satz von rekonstruierten Stellvertreterverschiebungsvektordifferenzen wird in der Cluster-Auflösungseinrichtung 40 in einen Satz von rekonstruierten bzw. decodierten Verschiebungsvektordifferenzen e(t) umgewandelt, indem die Cluster-Einteilung durch die Einrichtung 34 rückgängig gemacht wird. Die Cluster-Auflösungseinrichtung 40 verwendet hierzu gegebenenfalls Seiteninformationen, die die Cluster-Bildungseinrichtung 34 zusammen mit den Stellvertreterverschiebungsvektordifferenzen o(t) ausgibt, und die gegebenenfalls ferner in den codierten Datenstrom am Ausgang 14 als Seiteninformationen codiert werden, wie es bezugnehmend auf Fig. 3 noch erläutert werden wird.

Um nun die Verschiebungsvektoren d(t) zu rekonstruieren, liegt bei dem Addierer 32 an einem Eingang eine bestimmte rekonstruierte Verschiebungsvektordifferenz êᵢ(t) und gleichzeitig an dem anderen Eingang der gleiche Prädiktor d̂(t-1) an, der am invertierenden Eingang des Differenzierers 30 zu dem Zeitpunkt anliegt, als dieser aus dem Verschiebungsvektor dᵢ(t) die Verschiebungsvektordifferenz eᵢ(t) erzeugt. Das Ergebnis am Ausgang des Addierers ist folglich der rekonstruierte Verschiebungsvektor d̂ᵢ(t). Dieser erreicht die Prädiktionseinrichtung 42, die diesen dann zur Prädiktion der Verschiebungsvektoren d(t+1) für den nachfolgenden Datenabschnitt in dem Datenstrom am Eingang 12 verwenden kann, insbesondere für den Verschiebungsvektor dᵢ(t+1), sowie den Eingang des Addierers 48. Der Addierer 48 macht die Differenzbildung am Differenzierer 46 rückgängig, indem er zu den rekonstruierten Verschiebungsvektoren d(t) diejenigen prädizierten Kontrollpunkte m̂(t-1) addiert, die in dem Speicher 50 gespeichert sind und von den zu rekonstruierenden Kontrollpunkten m(t) durch den Differenzierer 46 abgezogen worden sind. Das Ergebnis des Addierers 48 sind folglich rekonstruierte Kontrollpunkte m (t), die in dem Speicher 50 eingespeichert werden, um die Kontrollpunkte m(t+1) des auf den aktuell codierten Datenabschnitt folgenden Datenabschnitts zu prädizieren. Als Ergebnis enthält der Speicher 50 folglich die Rekonstruktion des gerade übertragenen Meshes. Aufgrund der Quantisierung durch die Skalierungs-/Quantisierungseinrichtung 36 ist dieses Mesh im Speicher 50 nicht identisch zum Orginalmesh, d.h. m(t) ≠ m̂(t).

Das Ziel der Codierung in der Inter-Codierung 24 ist es, das rekonstruierte Mesh m (t) mit möglichst wenigen Bits dem Originalmesh m(t) so ähnlich wie möglich zu machen. Der Rekonstruktionsfehler wird durch den Unterschied zwischen Original- und decodiertem zeitlichen Vorgängermesh repräsentiert, d.h. durch d(t) = m(t) - m̂(t-1), und wird, wie im Vorhergehenden beschrieben, durch die Steuereinrichtung 54 dazu herangezogen, um bei zu großem Rekonstruktionsfehler auf Intra-Modus umzuschalten.

Bezug nehmend auf die vorhergehende Beschreibung der Funktionsweise des Codierers 10 wird darauf hingewiesen, dass ein alternativer Codierer mit einer örtlichen Prädiktion in der Prädiktionseinrichtung 42 ohne weiteres erhalten werden kann, wenn aus dem Blockschaltbild von Fig. 1 des Codierers 10 die Cluster-Bildungseinrichtung 34 und die Cluster-Aufspaltungseinrichtung 40 weggelassen werden, da dann der Prädiktionseinrichtung soeben rekonstruierte Verschiebungsvektoren d̂(t) am Ausgang des Addierers 32 unmittelbar zur Prädiktion von nachfolgenden Verschiebungsvektoren d(t) desselben Meshes zur Verfügung stehen, also auch insbesondere die von benachbarten Vertices.

Im Folgenden wird Bezug nehmend auf Fig. 3 der innere Aufbau der Cluster-Bildungseinrichtung 34 näher erläutert. Wie es zu sehen ist, umfasst die Cluster-Bildungseinrichtung 34 eine Einrichtung 80, die die Verschiebungsvektordifferenzen e(t) empfängt und in Gruppen einteilt, wie z.B. in die Gruppen {e₁(t) ... e_{n₁} (t)}, {e_{n₁+1} (t) ... {e_{n₂} (t)} ... {e_{n_{q-1}+1} (t) ... e_{N}(t)} mit 1≤n₁≤n₂...≤n_{g-1}≤N, wobei g die Anzahl der Gruppen darstellen soll und N die Anzahl an Vertices darstelle. Die Einteilung in Gruppen kann beispielsweise geometrisch vorgenommen werden, indem eine kubische Zelle, die alle Verschiebungsvektordifferenzen e(t) umgibt und dabei beispielsweise unter bestimmten Randbedingungen so klein wie möglich ist, in Oktanten eingeteilt wird, wobei alle Verschiebungsvektordifferenzen e(t), die in einem Oktanten liegen, zu einer Gruppe zusammengefasst werden.

Eine weitere Einrichtung 82 der Cluster-Bildungseinrichtung 34 bestimmt dann pro Gruppe eine Stellvertreterverschiebungsvektordifferenz, wie z.B. durch Mittelung aller zu der jeweiligen Gruppe gehörenden Verschiebungsvektordifferenzen. Das Ergebnis sind folglich Stellvertreterverschiebungsvektordifferenzen e̅₁(t) ... e̅_{g}(t), d.h. eine pro Gruppe. Eine weitere Einrichtung 84 der Cluster-Bildungseinrichtung 34 überprüft daraufhin für jede Gruppe die Übereinstimmung der Stellvertreterverschiebungsvektordifferenz mit den Verschiebungsvektordifferenzen der zugeordneten Gruppe. Bei zu schlechter Übereinstimmung bewirkt eine Einrichtung 86, dass die entsprechende(n) Gruppe(n) noch mal der Einrichtung 80 zugeführt bzw. noch mal unterteilt wird/werden. Ergibt sich bei keiner Gruppe mehr eine zu schlechte Übereinstimmung, ersetzt eine Einrichtung 88 der Cluster-Bildungseinrichtung 34 die Verschiebungsvektordifferenzen e(t) durch die Stellvertreterverschiebungsvektordifferenzen und die Einteilungsinformationen, die Auskunft darüber geben, welche Verschiebungsvektordifferenzen durch die Rekursionsschleife 80 - 86 zu Gruppen zusammengefasst wurden.

Es wird daran erinnert, dass es möglich ist, dass bei Verwendung einer gemischt örtlich/zeitlichen Prädiktion in der Einrichtung 42 zu einige der e(t) keine Prädiktoren ermittelt werden können, die somit im Unterschied zu den anderen desselben Meshes den Verschiebungsvektoren d entsprechen. In diesem Fall könnte es vorteilhaft sein, die Verschiebungsvektoren nicht in das Clustering der tatsächlichen Verschiebungsvektordifferenzen e einzubinden.

Die Einrichtung 40 macht die Dezimierung der Anzahl an Vektoren wieder rückgängig, indem sie unter Verwendung der Einteilungsinformationen allen Vertices der jeweiligen Gruppe die zugeordnete Stellvertretervektordifferenz zuordnet.

Die vorhergehende Beschreibung beschränkte sich im wesentlichen auf die Funktionsbeschreibung der beiden Prädiktionsschleifen 26 und 28. Im folgenden wird detaillierter auf die Funktionsweise der Codierungseinrichtung 56 eingegangen, die eine arithmetische Codierung der quantisierten Vektoren y(t) durchführt, genauer ausgedrückt der einzelnen Komponenten x, y, z dieser 3D-Vektoren, die ja Quantisierungen der Stellvertreterverschiebungsvektordifferenzen darstellen.

Bei der arithmetischen Codierung, die allgemein eine spezielle Form der Entropiecodierung ist, werden den zu codierenden Zeichen eines Quellalphabetes, hier also den zu codierenden Komponenten der Vektoren y(t), unterschiedliche Auftretenswahrscheinlichkeiten zugeordnet. Zur Codierung eines aktuell zu codierenden Zeichens wird ein aktuelles Wahrscheinlichkeitsintervall gemäß den Auftretenswahrscheinlichkeiten aller Zeichen des Quellalphabetes unterteilt und dann das Wahrscheinlichkeitsintervall aktualisiert, indem es auf denjenigen Teilbereich des aktuellen Wahrscheinlichkeitsintervalls verkleinert wird, der dem aktuell zu codierenden Zeichen entspricht. Diese Vorgehensweise wird für eine Folge von zu codierenden Zeichen wiederholt. Das für diese Folge von Zeichen schließlich ausgegebene Codewort gibt das sich ergebende Wahrscheinlichkeitsintervall an. Decoderseitig wird bei der arithmetischen Decodierung diese Vorgehensweise nachsimuliert bzw. emuliert, d.h. ein Initialwahrscheinlichkeitsintervall von beispielsweise 0 bis 1 wird gemäß den Auftretenswahrscheinlichkeiten des Quellalphabets unterteilt, um zu überprüfen, in welchen Bereich das Codewort zeigt, woraufhin das Wahrscheinlichkeitsintervall auf diesen Teilbereich aktualisiert wird, usw. Bei der im folgenden verwendeten binären arithmetischen Codierung ist das Quellalphabet auf zwei mögliche binäre Zustände bzw. Werte festgelegt, wie z.B. auf 0 und 1, weshalb die y(t)-Komponenten zuvor binarisiert werden, wie es nachfolgend beschrieben wird.

In dem vorliegenden Fall ist erkannt worden, dass bei der Wahrscheinlichkeitsstatistik der Verschiebungsvektordifferenzen eine arithmetische Codierung nach CABAC (CABAC = Context-Based Adaptive Binary Arithmetic Coding) zu einer hohen Komprimierungsrate führt. CABAC ist beispielsweise in D. Marpe, H. Schwarz und T. Wiegand: "Context-Based Adaptive Binary Arithmetic Coding in the H.264 / AVC Video Compression Standard" (invited paper), IEEE Transactions on Circuits and Systems for Video Technology, Bd. 13, Nr. 7, S. 620 - 636, Juli 2003, beschrieben. Durch Verwendung von CABAC bzw. einer hierauf basierenden binären arithmetischen Codierung für die geclusterten reduzierten Vektoren y(t) oder nicht-geclusterten Bewegungsvektoren d(t) eine höhere Datenkompression erreicht.

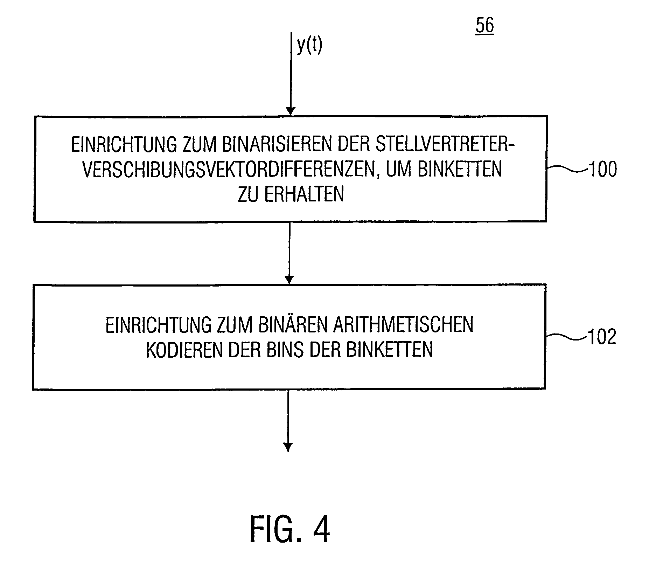

Im Folgenden wird der interne Aufbau der Codierungseinrichtung 56 beschrieben. Fig. 4 zeigt zunächst den groben Aufbau der Einrichtung 56. Wie es zu sehen ist, besteht dieselbe aus einer Aneinanderreihung einer Binarisierungseinrichtung 100 und einer Einrichtung 102 zur binären arithmetischen Codierung. Die Binarisierungseinrichtung empfängt die zu codierenden Werte y(t) und binarisiert dieselben, wobei die Binarisierung eines Wertes die Wandlung eines nicht-binären Wertes in eine binäre Repräsentation darstellen soll. Wie es im Folgenden beschrieben wird, verwendet die Binarisierungseinrichtung gemäß dem vorliegenden Ausführungsbeispiel exemplarisch eine Kombination zweier Binarisierungsschemata, nämlich einer unären Binarisierung bzw. genau genommen einer abgeschnitten unären (truncated unary; TU) Binarisierung und einer k-te-Ordnung-Exp-Golomb-Binarisierung. Das Ergebnis der Binarisierung durch die Einrichtung 100 ist eine Folge von Bits, die den jeweiligen zu codierenden Wert darstellt, wie z.B. eine Komponente x, y oder z einer Stellvertreterverschiebungsvektordifferenz y(t).

Das Ergebnis der Binarisierung eines Werts kann auch als eine Bin-Kette bezeichnet werden bzw. eine Folge von binären Entscheidungen bzw. Bins. Diese Bezeichnungsweise ergibt sich, wenn die Binarisierung als Abbildung des zu binarisierenden Wertes mittels eines binären Baumes auf eine Bin-Kette betrachtet wird, bei dem die Blätter des binären Baumes die möglichen Werte des zu binarisierenden Wertes darstellen, die Knoten des Baumes die binären Entscheidungen darstellen und den einzelnen jeweils zwei Zweigen von einem Knoten zu der nachfolgenden Ebene die möglichen binären Werte 0 bzw. 1 zugeordnet sind. Der zu binarisierende Wert wird dann auf diejenige Bin-Kette bzw. Bin-Folge abgebildet, die sich auf dem Weg von der Wurzel des binären Baumes bis zu dem jeweiligen Blatt ergibt, das dem zu binarisierenden Wert entspricht.

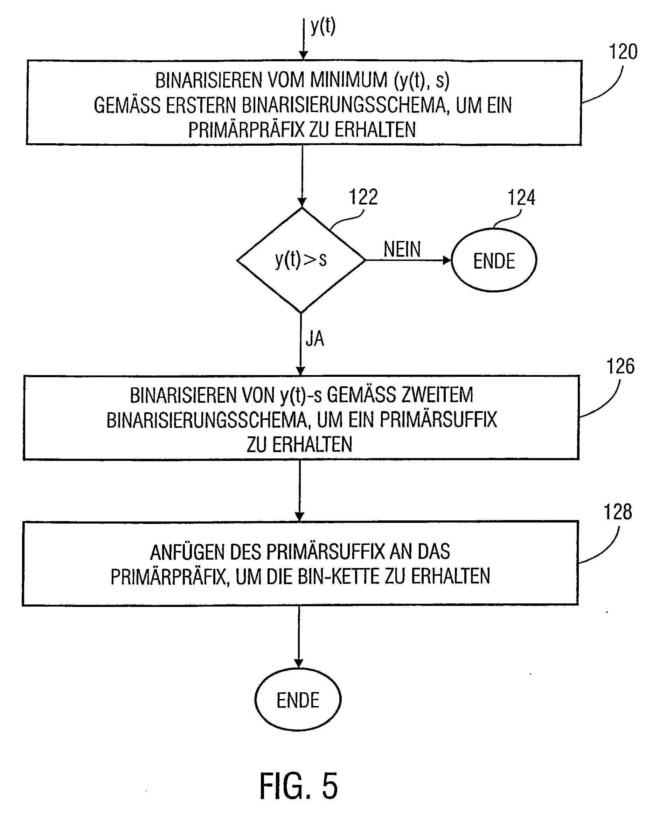

Die von der Einrichtung 100 verwendete Kombination aus TU-Binarisierung und k-te-Ordnung-Exp-Golomb-Binarisierung wird Bezug nehmend auf Fig. 5 näher erläutert, die die Funktionsweise der Binarisierungseinrichtung 100 veranschaulicht. Wie es zu erkennen ist, binarisiert zunächst die Binarisierungseinrichtung 100 den Minimalwert unter einem Grenzwert s und dem zu binarisierenden Werte y(t) gemäß einem ersten Binarisierungsschema, hier der unären Binarisierung, um ein Primär-Präfix zu erhalten. Die unäre Binarisierung eines Wertes x erzeugt ein Codewort der Länge x, das mit x-1 Einsen beginnt und einer Null endet. Die hier genau genommen für die Binarisierung des Präfixes verwendete TU-Binarisierung stellt eine unäre Binarisierung unter Verwendung eines Grenzwertes w dar, der hier gleich s bzw. 15 beträgt. Bei der TU-Binarisierung von Werten größer oder gleich s wird im Unterschied zur reinen unären Binarisierung die abschließende Null weggelassen.

In einem darauffolgenden Schritt 122 überprüft die Binarisierungseinrichtung 100, ob der zu binarisierende Wert y(t) größer als der Grenzwert s ist, wobei, falls dies nicht der Fall ist, die Binarisierungseinrichtung 100 den Binarisierungsprozess für diesen zu binarisierenden Wert y(t) beendet 124. Folglich besteht in diesem Fall das Binarisierungsergebnis lediglich aus dem Präfix. Andernfalls binarisiert in einem Schritt 126 die Einrichtung 100 die Differenz aus dem zu binarisierenden Wert y(t) und dem Grenzwert s gemäß einem zweiten Binarisierungsschema, hier einem k-te-Ordnung-Exp-Golomb-Schema, um ein Primärsuffix zu erhalten.

Das Primärsuffix wird an das Primärpräfix in einem Schritt 128 angehängt, um das Binarisierungsergebnis bzw. die Bin-Kette zu erhalten.

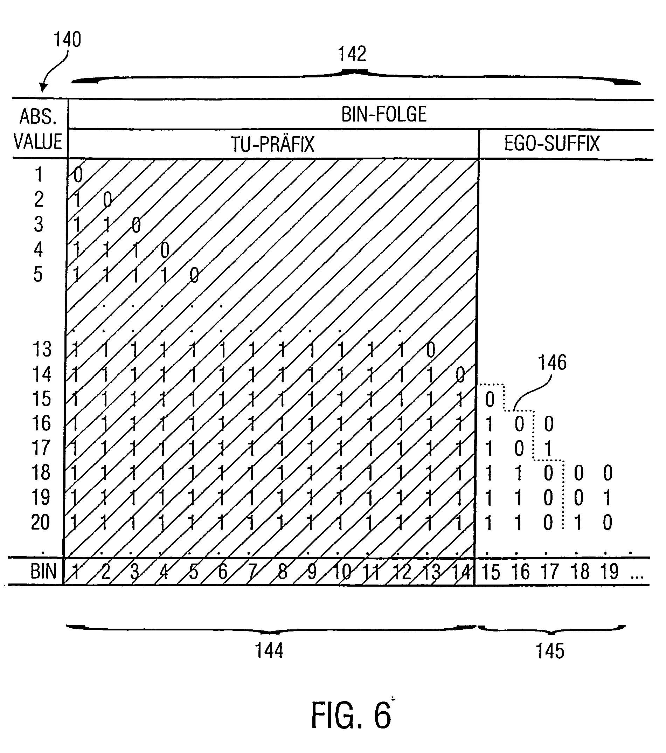

Fig. 6 zeigt exemplarisch das Ergebnis der Binarisierung nach Fig. 5 für den exemplarischen Fall von k = 0 und s = 14, wobei die Tabelle in Fig. 6 in der linken Spalte 140 die möglichen Werte des zu binarisierenden Wertes zeigt, und rechts davon bei 142 jeweils das Binarisierungsergebnis bzw. die entsprechende Bit- bzw. Bin-Folge gezeigt ist. Wie es zu erkennen ist, besteht die Bin-Folge 142 für zu binarisierende Werte zwischen 1 und 14 lediglich aus einem Präfix.

Zu binarisierende Werte größer s umfassen nicht nur das TU-Präfix 144, sondern auch ein Suffix 145, das hier eine Exp-Golomb-Binarisierung 0ter Ordnung von zu binarisierendem Wert b minus s darstellt. Eine gestrichelte Linie 146 zeigt an, dass das Primär-Suffix 145 selbst wiederum aus einem Sekundärpräfix, nämlich links der gestrichelten Linie 146, und einem Sekundärsuffix, nämlich rechts der gestrichelten Linie, bestehen kann. Die letzte Zeile in der Tabelle von Fig. 6 zeigt eine Bin-Nummer an, die für die Zuordnung der einzelnen Bins zu Kontextmodellen relevant sein kann, wie es im Folgenden noch erörtert wird.

Der Vollständigkeit halber zeigt der untenstehende Pseudo-Programmcode, wie gemäß dem k-te-Ordnung-Exp-Golomb-Schema ein zu binarisierender Wert b auf eine Bitfolge abgebildet wird bzw. wie die Bin-Folge abhängig von b konstruiert werden kann:

```
 while(1) {
   if (b >= (1 << k)) {
        setze(1) // Setzen der Einsen des
                      // unären Sekundärpräfixes
        b = b - (1 << k)
        k++
    } else {
        setze(0) // Setzen der Abschluss-Null des
                      // unären Sekundärpräfixes
        while(k--) // Erzeugen des Se-
             setze((b >> k) & 0x01) //kundärsuffixes in
        break // Binärdarstellung
   } // mit k Stellen
 }
```

wobei k die Ordnung des Exp-Golomb-Schemas sei, ein nachgestelltes "++" eine Inkrementierung um 1 und ein nachgestelltes "--" eine Dekrementierung um 1 anzeige, und "x << y" eine arithmetische Schiebeoperation einer Zweier-Komplement-Ganzzahldarstellung von x um y binäre Stellen sei, und auf ähnliche Weise "x >> y" eine arithmetische Schiebeoperation einer Zweier-Komplement-Ganzzahldarstellung von x um y Binärstellen nach rechts darstelle, und "&" eine bitweise "UND"-Verknüpfung anzeige, die an Zweier-Komplement-Darstellungen arbeitet. Der Befehl "setze" zeige an, dass ein Bit der Bitfolge gesetzt auf den wert in der Klammer gesetzt werde.

Anders ausgedrückt ist der Sekundärpräfix des Primärsuffix ein Unär-Code des Werts von l(b) = └log₂(b/2^{k}+1)┘, wobei der Sekundärsuffix eine Binärdarstellung der Zahl von b+2^{k}(1-2^{l(b)}) unter Verwendung von k+l(b) signifikanten Bits ist.

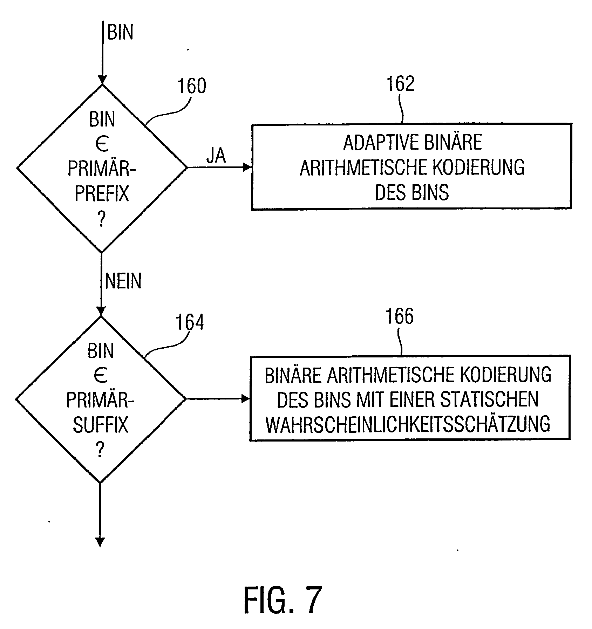

Anhand von Fig. 7 wird im folgenden die Funktionsweise der Einrichtung 102 zum binären arithmetischen Codieren der Bins des Binarisierungsergebnisses beschrieben. Die Bins einer Bin-Kette werden nacheinander in einem Schritt 160 daraufhin überprüft, ob dieses Bin Teil des Primärpräfixes ist oder nicht. Falls dies der Fall ist, verwendet in einem Schritt 162 die Einrichtung 102 eine adaptive binäre arithmetische Codierung des Bins. Das bedeutet, sie verwendet für das Bin bzw. Bit eine variable Wahrscheinlichkeitsschätzung zur vorläufigen Unterteilung des aktuellen Wahrscheinlichkeitsintervalls, um daraufhin abhängig vom Wert des Bins das Wahrscheinlichkeitsintervall auf eines der beiden Hälften des unterteilten Wahrscheinlichkeitsintervalls zu aktualisieren, wobei anschließend die Wahrscheinlichkeitsschätzung für das nächste Bin je nach dem Wert des aktuellen Bins aktualisiert wird. Dabei ist es möglich, dass im Schritt 162 zudem eine kontextabhängige adaptive binäre arithmetische Codierung vorgenommen wird, wie es auch bei CABAC der Fall ist. In diesem Fall verwendet die Einrichtung 102 nicht für alle Bin- bzw. Bit-Positionen des Primärpräfixes die gleiche Wahrscheinlichkeitsschätzung, sondern teilt beispielsweise den einzelnen Bin-Positionen verschiedene Kontextmodelle zu, denen wiederum jeweils eine eigene adaptive Wahrscheinlichkeitsschätzung zugeordnet ist.

Fällt die Überprüfung im Schritt 160 negativ aus, so wird in einem Schritt 162 überprüft, ob das Bin Teil eines Primärsuffixes ist. Dieser Schritt könnte fehlen, falls dem Codierer 56 lediglich quantisierte Stellvertreterverschiebungsvektordifferenzen zugeführt würden, was jedoch aus Gründen der Übertragung von Seiteninformationen eventuell nicht der Fall ist. Fällt die Überprüfung im Schritt 164 positiv aus, so verwendet die Einrichtung 102 im Schritt 166 eine binäre arithmetische Codierung des aktuellen Bins mit einer statischen Wahrscheinlichkeitsschätzung, d.h. mit einer Wahrscheinlichkeitsschätzung, nach welcher das Bin mit einer festen Wahrscheinlichkeit p den Wert 1 und mit einer festen Wahrscheinlichkeit 1-p den binären Wert 0 aufweist. Vorzugsweise ist p = 0,5. Die statische Wahrscheinlichkeitsschätzung für die Bins des Primärsuffixes zu verwenden, ermöglicht eine ernorme Aufwandverringerung, da keine Verwaltung adaptiver Wahrscheinlichkeitsschätzungen bzw. von Kontextmodellen notwendig ist.

Durch die vorher beschriebene Kombination eines Verfahrens zur adaptiven binären arithmetischen Codierung und der zusätzlichen kontextabhängigen Modellierung der Wahrscheinlichkeiten der zu codierenden Symbole erzielt oben beschriebenes arithmetisches Codierungsschema einen hohen Grad an Adaptivität an die zu codierende Signalstatistik und stellt eine äußerst effektive Methode zur Entropiecodierung dar. Es wird eine signifikante Kompressionsverbesserung erzielt. Zudem eignet sich die arithmetische Codierung nach oben beschriebener Art und Weise aufgrund seiner geringen Komplexität zur Integration in Hard- und Software, insbesondere dann, wenn zur Implementierung CABAC verwendet wird, bei der die Intervallaktualisierung und die Aktualisierung der Wahrscheinlichkeitsschätzungen multiplikationslos tabellenbasiert ablaufen.

Insbesondere ermöglicht es die im Vorhergehenden beschriebene Kombination aus TU- und k-te-Ordnung-Exp-Golomb-Binarisierung, eine effiziente Repräsentation relativ stark voneinander abweichender quantisierter Stellvertreterverschiebungsvektordifferenzen beliebiger Amplitude zu erzielen, wie sie durch die Zusammenfassung ähnlicher und benachbarter Verschiebungsvektordifferenzen nach dem oben beschriebenen Algorithmus entstehen. Die optimale Länge s des unären Teils der binären Repräsentation sowie die Ordnung k des verwendeten Golomb-Codes werden abhängig von der Gesamtheit der zu codierenden Werte ermittelt. Durch die Verwendung mehrerer Kontextmodelle zur binären arithmetischen Codierung der binarisierten Bin-Folgen erfolgt eine bessere Anpassung an die Signalstatistik.

Zur arithmetischen Codierung wird noch auf folgendes hingewiesen. Es ist natürlich möglich, die Codeworterzeugung und die Adaption erneut für jedes Mesh durchzuführen. Durch die bereits beschriebene Zusammenfassung ähnlicher und benachbarter Verschiebungsvektordifferenzen in Clustern wird die Anzahl der zu übertragenden Werte y(t) jedoch verringert. Dabei kann die Anzahl derart klein werden, dass die Verteilung der zu codierenden Symbole bezüglich ihrer Eignung zur arithmetischen Codierung mittels oben beschriebenen arithmetischen Codierungsschemas nicht mehr optimal ist, da sich zwischen zwei aufeinanderfolgenden 3D-Meshes keine für diese Codierung geeignete Häufigkeitsverteilung einstellt. Zur effizienten arithmetischen Codierung können daher die prädizierten Verschiebungsvektoren einer Sequenz aufeinanderfolgender 3D-Geometrien zu einer sogenannten Group-of-Meshes bzw. Gruppen von Meshes bzw. Gruppen von Datenabschnitten zusammengefasst werden, für die dann ein gemeinsames Codewort ermittelt wird, d.h. mit kontinuierlicher Intervallunterteilung und (Kontext)Adaption. Somit werden die Verschiebungsvektordifferenzen der gesamten Gruppe gemeinsam arithmetisch codiert, im Gegensatz zu einer separaten Frame-to-Frame-Codierung bzw. Mesh-zu-Mesh-Codierung einzelner Meshes. Durch die Zusammenfassung stellt sich eine geeignetere Symbolhäufigkeit bzw. Verteilerfunktion ein.

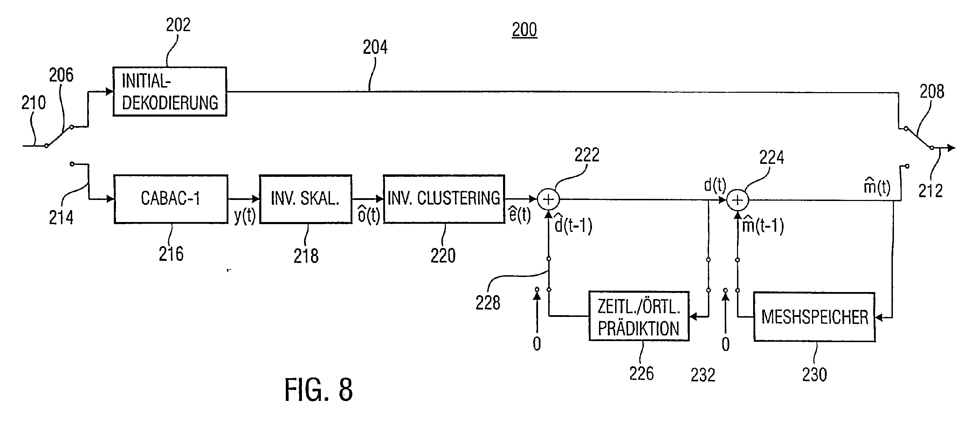

Bezug nehmend auf Fig. 8 wird im Folgenden der Vollständigkeit halber der Aufbau eines zur Decodierung eines von dem Codierer nach Fig. 1 erzeugten codierten Datenstroms geeigneten Decodierers beschrieben. Der Decodierer nach Fig. 8 ist allgemein mit 200 angezeigt. Sein Aufbau entspricht im wesentlichen demjenigen Teil des Aufbaus des Codierers 10, der sich von dem Ausgang 14 zu dem Mesh-Speicher 50 erstreckt, mit dem Unterschied, dass die arithmetische Codierung natürlich zu einer arithmetischen Decodierung umgewandelt wird. Dementsprechend umfasst der Decodierer 200 einen Initialdecodierer bzw. Intra-Decodierer 202, der in einen Intra-Decodierungspfad 204 geschaltet ist, der sich über einen eingangseitigen Schalter 206 und einen ausgangsseitigen Schalter 208 zwischen einem Eingang 210 zum Empfang des codierten Datenstroms und einem Ausgang 212 zur Ausgabe des decodierten Datenstroms bzw. rekonstruierten Datenstroms erstreckt.

Neben dem Intra-Decodierungspfad 204 existiert ein Inter-Decodierungspfad 214, in den eine arithmetische Decodierungseinrichtung 216 zur Durchführung einer zu der Codierung der Einrichtung 56 inversen arithmetischen Codierung, eine inverse Skalierungseinrichtung 218, eine Cluster-Aufspaltungseinrichtung 220, ein Kombinierer bzw. Addierer 222 und ein Kombinierer bzw. Addierer 224 in Reihe geschaltet sind, und der sich vom Eingang 210 bis zum Schalter 208 erstreckt. Die Komponenten 218 - 224 entsprechen in Funktionsweise und obliegender Aufgabe den Komponenten 38, 40, 32 und 48 des Codierers 10. Dementsprechend umfasst der Decodierer 200 eine Zeit/Ort-Prädiktionseinrichtung 226, deren Eingang zwischen den Ausgang des Addierers 222 und einen Eingang des Addierers 224 angeschlossen ist, und deren Ausgang über einen Schalter 228 mit einem Eingang des Addierers 222 verbunden ist. Der Schalter 228 entspricht dem Schalter 44 aus Fig. 1 und schaltet entweder den Ausgang der Prädiktionseinrichtung 226 oder eine logische Null als Ersatzprädiktionswert auf den Eingang des Addierer 222. Der andere Eingang des Addierers 222 ist mit dem Ausgang der Cluster-Aufspaltungseinrichtung 220 verbunden. Auf ähnliche Weise umfasst der Decodierer 200 einen Mesh-Speicher 230, dessen Eingang mit dem Ausgang des Addierers 224 verbunden ist, und dessen Ausgang über einen dem Schalter 52 entsprechenden Schalter 232 mit einem Eingang des Addierers 224 verbunden ist. Der Schalter 232 ist dazu vorgesehen, entweder einen Prädiktionsersatzwert von Null oder das Ausgangssignal des Mesh-Speichers 230 an den Eingang des Addierers 224 anzulegen. Eine in Fig. 8 nicht gezeigte Steuereinrichtung steuert die Schalter 206, 208, 228 und 232, um beim Decodierer Intra- und Inter-Modus auf eine Art und Weise einzustellen, die derjenigen entspricht, wie sie bei Fig. 1 beschrieben worden ist, wobei die Schalter 206 und 208 stets synchron arbeiten.

Die Funktionsweise des Decodierers 200 ergibt sich aus der vorhergehenden Beschreibung von Fig. 1 und wird im folgenden deshalb nur noch einmal kurz skizziert. Wenn der zu decodierende Datenstrom am Eingang 210 eintrifft, liegt zunächst der Intra-Modus vor, und somit übernimmt die Intra-Decodierungseinrichtung 202 die Decodierung des ersten Datenabschnitts bzw. Meshes. Das Ergebnis wird über den Schalter 208 als Teil des rekonstruierten/dekodierten Datenstroms am Ausgang 212 ausgegeben. Das Ergebnis der Decodierung wird über eine Reihenschaltung, die in Fig. 8 der Übersichtlichkeit halber nicht gezeigt ist, während des Intra-Modus aber der Reihenschaltung aus den Einrichtung 34 und 36 des Codierers von Fig. 1 entspricht, an den Eingang der Inversskalierungseinrichtung 218 geleitet, wodurch im Intra-Modus eine Meshrekonstruktion erhalten wird, die in dem Mesh-Speicher 230 eingetragen wird. Dabei sind die Schalter 228 und 232 beide auf das Ersatzprädiktorsignal Null geschaltet.

Die Decodierung des nächsten Datenabschnitts erfolgt bereits über den Inter-Decodierungspfad 214. Empfangene arithmetisch codierte quantisierte Stellvertreterverschiebungsvektordifferenzen werden in der Decodierungseinrichtung 216 einer arithmetischen Decodierung unterzogen. Genauer ausgedrückt ermittelt der Decodierer 216 die Bin-Folge für einen codierten Wert y(t) Bin für Bin, indem die Einrichtung 216 ein aktuelles Wahrscheinlichkeitsintervall gemäß der je nach Zugehörigkeit zu Primärpräfix oder Primärsuffix zu verwendenden adaptiven oder statischen Wahrscheinlichkeitsschätzung teilt und untersucht, ob das empfangene Codewort in dem codierten Datenstrom in der entstehenden oberen oder unteren Hälfte liegt usw. Auf diese Weise erhält die Einrichtung 216 die Binarisierung des zu decodierenden Wertes y(t), die sie anschließend umkehrt, d.h. aus der Binarisierung den Wert in einer nicht-binarisierten Darstellung ermittelt. Das Ergebnis sind die Werte y(t), wie sie im Codierer 10 der Einrichtung 56 zugeführt worden sind.

Ab da erfolgt die Vorgehensweise, wie sie in Fig. 1 beschrieben worden ist, d.h. die Werte y(t) werden invers skaliert und aufgespalten, um die Verschiebungsvektordifferenzen in rekonstruierter Form, ê(t) zu erhalten. Liegt kein Prädiktor in der Prädiktionseinrichtung 226 für eine Verschiebungsvektordifferenz vor, was bedeutet, dass auch bei der Codierung kein Prädiktor vorlag, so stellt die spezielle Verschiebungsvektordifferenz êᵢ(t) bereits einen Verschiebungsvektor d̂(t) dar und wird deshalb lediglich mit dem Ersatzprädiktor 0 durch den Addierer 222 kombiniert. Andernfalls führt der Addierer 222 eine Summe zwischen ê(t) und d̂(t-1) durch. Auf ähnliche Weise wird der Addierer 224 eine Addition zwischen d̂(t) und m̂(t-1) durch, woraufhin das Ergebnis am Ausgang 212 ausgegeben wird.

Bezug nehmend auf die vorhergehende Beschreibung wird noch auf folgendes hingewiesen. Obwohl im Vorhergehenden die vorliegende Erfindung lediglich vor dem Hintergrund einer Polygonmesh-Parametrisierung beschrieben worden ist, ist die vorliegende Erfindung ferner auch auf andere Parametrisierungen anwendbar. Spline-Parametrisierungen definieren ein 3D-Graphikmodell beispielsweise dadurch, dass die Oberfläche stückweise oder im Ganzen als Funktionen parametrisiert wird, bei denen die Vertices als Kontrollpunkte dienen. Eine der bekanntesten Formen ist die Beschreibung durch Splines, bei der die Polynome niedriger Ordnung, wie z.B. kubische B-Splines, verwendet werden.

Eine weitere mögliche Parametrisierungsform, bei der die vorliegende Erfindung anwendbar ist, ist die Slice-Parametrisierung bzw. die Scheibendarstellung. Sie ist eine Beschreibungsform der Oberfläche, die besonders in der Computertomographie Anwendung findet. Sie entsteht durch eine Reihe von 2D-Schnittflächen, deren Positionen im 3D-Raum bekannt sind. Die Konturen dieser Schnittflächen werden dann durch Polygone oder parametrisierende Funktionen zu einem 3D-Objekt verbunden.

Eine weitere Parametrisierungsform sind sogenannte Pointclouds bzw. Punktwolken. Die Oberflächenbeschreibung entsteht hier durch die Ausdehnung der Kontrollpunkte in einfache geometrische 3D-Körper, wie z.B. Kugeln oder Ellipsoide. Durch die Berührung und Durchdringung dieser geometrischen Körper entsteht eine geschlossene Oberfläche des Graphikmodells.

Voxelmodell-Parametrisierungen bilden eine spezielle Form der 3D-Beschreibung ohne Konnektivität. Hier werden Würfel oder Quader als geometrische Körper verwendet, die je nach Ausführungsform gleich oder unterschiedlich groß sind, wobei die Lage der geometrischen Körper durch die Kontrollpunkte bestimmt wird.

Skelettmodell-Parametrisierungen verwenden Kontrollpunkte als Stützstellen einer Anzahl eindimensionaler Parametrisierungsfunktionen, die das Skelett eines 3D-Modells beschreiben. Die Oberfläche des Modells entsteht dann durch die radiale Ausdehnung um die Skelettfunktionen, etwa als Zylinder, Ellipsoide oder Blobs.

Schließlich existiert noch eine Form der Parametrisierung, bei der geometrische Primitive bzw. Grundelemente verwendet werden. 3D-Graphiken bzw. -Objekte können hier als einfache sogenannte geometrische Primitiven oder ein Zusammenschluss mehrerer Primitiven dargestellt werden. Primitiven können Kugeln, Kegel, Pyramiden, Kegelstümpfe, Pyramidenstümpfe, Zylinder, Prismen, Quader, Ellipsoide oder Parallelepipede sein, deren Lage und Positionen durch Kontrollpunkte angegeben werden.

Wie im Vorhergehenden erwähnt, kann sich je nach der verwendeten Parametrisierung die Art und Weise ändern, in der bei der örtlichen Prädiktion die örtlichen Nachbarn des aktuell zu codierenden Vertex bestimmt werden.

In der vorhergehenden beschriebenen äußeren Schleife, die die Bewegungs- oder Verschiebungsvektoren zeitlich aufeinanderfolgenden Meshes ermittelte, und der inneren Schleife, die zur Differenzbildung zwischen zeitlich oder örtlich benachbarten Verschiebungsvektoren verwendet wurde, fand eine Skalierung in der Einrichtung 36 statt. Diese Skalierung kann auch fehlen, so dass der Block 38 bzw. 218 fehlen könnte. Weitere Verallgemeinerungen sind Fachleuten bei Studium der vorliegenden Erfindung bestimmt ersichtlich, weshalb obige Beschreibung spezieller Ausführungsbeispiele nicht einschränkend ausgelegt werden soll.

Obige Ausführungsbeispiele stellen folglich Verfahren und Anordnungen zur Encodierung und Dekodierung von zeitlich veränderlichen 3D-Computergraphikmodellen dar, wobei die En- und Dekodierung Bewegungskompensation, Quantisierung und arithmetische Codierung umfasst, sowie ein entsprechendes Computerprogramm und ein entsprechendes Computerlesbares Medium, auf welchem des Computerprogramm ausführbar gespeichert ist.

Insbesondere beschreiben obige Ausführungsbeispiele ein komplettes System zur INTRA-INTER-Codierung von 3D Meshes, wobei statische und dynamische Modelle (mit und ohne Topologieänderung) gleichermaßen verarbeitet werden können. Eine Umschaltung auf INTRA-Modus nach einer festen oder variablen Anzahl von codierten Meshes ist möglich. Die Prädiktion der Verschiebungsvektoren kann zwischen den Vertices eines 3D Meshes in aufeinanderfolgenden Zeitpunkten stattfinden. Verwendung, Anpassung und Optimierung von CABAC zur arithmetischen Codierung von Verschiebungsvektoren und Verschiebungsvektordifferenzen von 3D-Meshes separat für jeden Zeitpunkt oder gemeinsam für eine Anzahl aufeinanderfolgender Zeitpunkte in einer Group-of-Meshes Ermöglicht eine weiter erhöhte Komprimierungsrate. Die Komponentenweise Vorhersage eines oder mehrerer Verschiebungsvektoren eines oder mehrerer Vertices kann mit einem Median-Prädiktor oder einem gemeinsamen Gruppen-Prädiktor am Coder und mit oder ohne Seiteninformation am Decoder stattfinden. Formierung und optionale Übertragung entsprechender Seiteninformation für einen Median-Prädiktor mit Hilfe örtlich und zeitlich zuvor codierter Verschiebungsvektoren von Vertices kann vorgesehen sein. Ebenso ist eine Formierung und Übertragung eines gemeinsamen Prädiktors für eine Gruppe von zu codierenden Verschiebungsvektoren von Vertices möglich. Eine Quantisierung der komponentenweisen Verschiebungsvektordifferenzen zwischen jeweils dem originalen Verschiebungsvektor der zu codierenden Vertices und dem korrespondierenden prädizierten Verschiebungsvektor ermöglicht kleine Werte, die leichter komprimierbar sind. Entropiedecodierung der quantisierten oder unquantisierten Verschiebungsvektordifferenzen zwischen jeweils dem originalen Verschiebungsvektor der zu codierenden Vertices und dem korrespondierenden prädizierten Verschiebungsvektor liefert eine weitere Komprimierung. Decodierung der codierten Vertices durch Addition des am Decoder berechneten Median-Prädiktors oder Gruppen-Prädiktors und den decodierten Verschiebungsvektordifferenzen findet decoderseitig statt. Entropiecodierung mit einem kontext-adaptiven arithmetischen Coder kann zusätzlich vorgesehen sein, wie oben beschrieben, ebenso wie die entsprechende Entropiedecodierung. Kontextberechnung am Coder und Decoder mit Hilfe örtlich und zeitlich zuvor codierter Verschiebungsvektoren von Vertices und den Positionen dieser Vertices ist beides möglich, wie oben beschrieben.

Abschließend wird darauf hingewiesen, dass abhängig von den Gegebenheiten das erfindungsgemäße Kodierungsschema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

Insbesondere können obige Verfahrensschritte in den Blöcken der Flussdiagramme oder die Einrichtungsblöcke einzeln oder zu mehreren in Unterprogrammroutinen implementiert sein. Alternativ ist freilich auch eine Implementierung dieser Blöcke als einzelne Teile einer ASIC möglich.

## Patentansprüche

1. Vorrichtung zum Codieren eines Datenstroms, der ein zeitlich veränderliches Graphikmodell (60) darstellt, wobei der Datenstrom eine Folge von Datenabschnitten aufweist, die Koordinatendaten (m) aufweisen, die das Graphikmodell (60) zu unterschiedlichen Zeitpunkten (t) definieren, mit folgenden Merkmalen:
einer ersten Einrichtung (26) zum Prädizieren von Koordinatendaten (m(t)) eines aktuell zu codierenden ersten Datenabschnitts basierend auf Koordinatendaten (m(t-1)) eines zweiten, dem aktuell zu codierenden ersten Datenabschnitt vorausgehenden Datenabschnitts, um prädizierte Koordinatendaten (m̂(t)) für den ersten Datenabschnitt zu erhalten;
einer ersten Einrichtung (46) zum Vergleichen der prädizierten Koordinatendaten (m̂(t)) für den ersten Datenabschnitt und der Koordinatendaten (m(t)) für den ersten Datenabschnitt, um Prädiktionsfehlervektoren (d(t)) für den aktuell zu codierenden ersten Datenabschnitt zu erhalten, **gekennzeichnet durch** eine zweite Einrichtung (24) zum Prädizieren der Prädiktionsfehlervektoren (d(t)) für den ersten Datenabschnitt basierend auf bereits erhaltenen Prädiktionsfehlervektoren (d(t-1), d(t)), um prädizierte Prädiktionsfehlervektoren (d̂(t-1), d̂(t)) für den ersten Datenabschnitt zu erhalten;
eine zweite Einrichtung (30) zum Vergleichen der prädizierten Prädiktionsfehlervektoren (d̂(t-1), d̂(t)) für den ersten Datenabschnitt und der Prädiktionsfehlervektoren (d(t)) für den ersten Datenabschnitt, um Prädiktionsfehlervektordifferenzen (e(t)) für den ersten Datenabschnitt zu erhalten; und
eine Einrichtung (34, 36, 56) zum Verarbeiten der Prädiktionsfehlervektordifferenzen (e(t)) für den ersten Datenabschnitt, um einen Teil eines codierten Datenstroms zu erhalten.

2. Vorrichtung gemäß Anspruch 1, bei dem die erste Einrichtung (26) zum Prädizieren und die erste Einrichtung zum Vergleichen ausgebildet sind, um die Koordinatendaten (m(t-1)) des zweiten Datenabschnitts basierend auf Koordinatendaten (m(t-2)) eines dritten, dem zweiten Datenabschnitt vorausgehenden Datenabschnitts zu prädizieren, um prädizierte Koordinatendaten ((m̂(t-1)) für den zweiten Datenabschnitt zu erhalten, und die prädizierten Koordinatendaten (m̂(t)) für den zweiten Datenabschnitt und die Koordinatendaten (m(t-1)) des zweiten Datenabschnitts zu vergleichen, um Prädiktionsfehlervektoren (d(t-1)) für den zweiten Datenabschnitt zu erhalten, und wobei die zweite Einrichtung (42) zum Prädizieren ausgebildet ist, um die Prädiktionsfehlervektoren (d(t)) für den ersten Datenabschnitt basierend auf den Prädiktionsfehlervektoren (d(t-1)) für den zweiten Datenabschnitt zu prädizieren.

3. Vorrichtung gemäß Anspruch 2, die ferner folgendes Merkmal aufweist:
eine Einrichtung (54) zum Überprüfen, ob zwischen den Koordinatendaten (m(t)) des aktuell zu codierenden ersten Datenabschnitts und den Koordinatendaten (m(t-1)) des zweiten Datenabschnitts eine eindeutige Zuordnung besteht, und Bewirken, falls dies nicht der Fall ist, dass die Koordinatendaten (m(t)) des aktuell zu codierenden Datenabschnitts ohne Prädiktion unmittelbar codiert (16) werden, und dass Prädiktionen, die an Koordinatendaten (m(t+1)) von auf den ersten Datenabschnitt folgenden Datenabschnitten nicht basierend auf Koordinatendaten von Datenabschnitten vor dem ersten Datenabschnitt durchgeführt werden.

4. Vorrichtung gemäß Anspruch 2 oder 3, bei der die zweite Einrichtung (24) zum Prädizieren ausgebildet ist, um die Prädiktionsfehlervektoren (d(t)) für den ersten Datenabschnitt basierend auf denjenigen Prädiktionsfehlervektoren (d(t-1)) für den zweiten Datenabschnitt zu prädizieren, und die zweite Einrichtung (30) zum Vergleichen ausgebildet ist, um den Vergleich mit denjenigen Prädiktionsfehlervektoren (d(t-1)) für den zweiten Datenabschnitt durchzuführen, die durch eine eindeutige Zuordnung zwischen den Koordinatendaten (m(t)) des ersten Datenabschnitts und den Koordinatendaten (m(t-1)) des zweiten Datenabschnitts den Prädiktionsfehlervektoren (d(t)) für den ersten Datenabschnitt zugewiesen sind.

5. Vorrichtung gemäß einem der vorhergehenden Ansprüche, bei der die zweite Einrichtung (24) zum Prädizieren ausgebildet ist, um die Prädiktion eines Teils der Prädiktionsfehlervektoren (d(t)) für den aktuell zu codierenden ersten Datenabschnitt basierend auf bereits erhaltenen Prädiktionsfehlervektoren (d(t)) für den ersten Datenabschnitt vorzunehmen.

6. Vorrichtung gemäß einem der vorhergehenden Ansprüche, bei der die zweite Einrichtung (24) zum Prädizieren ausgebildet ist, um zur Prädiktion eines vorbestimmten Prädiktionsfehlervektors (dᵢ(t)) für den ersten Datenabschnitt
zunächst Nachbarschaftsinformationen in dem Datenstrom daraufhin zu überprüfen, ob bereits für eine solche Koordinateninformation (mⱼ(t)) der Koordinatendaten des ersten Datenabschnitts eine prädizierte Koordinateninformation (m̂ⱼ(t)) und aus dieser wiederum ein Prädiktionsfehlervektor (dⱼ(t)) erhalten worden ist, die zu einer Koordinateninformation (mᵢ(t)) eine Nachbarschaftsbeziehung aufweist, zu der eine prädizierte Koordinateninformation (m̂ᵢ(t)) erhalten worden ist, aus der wiederum der vorbestimmte Prädiktionsfehlervektor (dᵢ(t)) erhalten worden ist, falls eine solche Koordinateninformation (m̂ⱼ(t)) existiert, den Prädiktionsfehlervektor dⱼ(t) zur Prädiktion des vorbestimmten Prädiktionsfehlervektors (dᵢ(t)) zu verwenden, der aus der für die solche Koordinateninformation (mⱼ(t)) prädizierten Koordinateninformation (m̂ⱼ(t)) erhalten worden ist.

7. Vorrichtung gemäß einem der vorhergehenden Ansprüche, bei der die zweite Einrichtung (24) zum Prädizieren ausgebildet ist, um in dem Fall, dass für einen vorbestimmten Prädiktionsfehlervektor (dᵢ(t)) unter den Prädiktionsfehlervektoren für den ersten Datenabschnitt mehr als ein Prädiktor vorliegt, die Prädiktion des vorbestimmten Prädiktionsfehlervektors basierend auf dem Median dieser Prädiktoren vorzunehmen.

8. Vorrichtung gemäß einem der vorhergehenden Ansprüche, die ferner folgendes Merkmal aufweist:
eine Einrichtung (54) zum Überprüfen, ob die Prädiktionsfehlervektoren (d(t)) ein vorbestimmtes Kriterium verletzen, und, falls dies der Fall ist, zu bewirken, dass die Koordinatendaten (m(t)) des ersten Datenabschnitts ohne Prädiktion unmittelbar codiert (16) werden, und dass Prädiktionen, die an Koordinatendaten von auf den ersten Datenabschnitt folgenden Datenabschnitten durchgeführt werden, nicht basierend auf Koordinatendaten von Datenabschnitten vor dem ersten Datenabschnitt durchgeführt werden.

9. Vorrichtung gemäß einem der vorhergehenden Ansprüche, bei der die Einrichtung (56) zum Codieren folgendes Merkmal aufweist:
eine Einrichtung (36) zum Quantisieren der Prädiktionsfehlervektordifferenzen (e(t)).

10. Vorrichtung gemäß einem der vorhergehenden Ansprüche, bei der die Einrichtung (56) zum Codieren folgendes Merkmal aufweist:
eine Einrichtung (34) zum Dezimieren der Anzahl an Prädiktionsfehlervektordifferenzen durch
(a) Einteilen (80) der Prädiktionsfehlervektordifferenzen in Gruppen, abhängig von den Koordinateninformationen, zu denen derjenige Prädiktionsfehlervektor erhalten worden ist, zu dem die jeweilige Prädiktionsfehlervektordifferenz bestimmt worden ist, oder von Nachbarschaftsinformationen in dem Datenstrom;
(b) Bestimmen (82) einer Stellvertreterprädiktionsfehlervektordifferenz für jede Gruppe von Prädiktionsfehlervektordifferenzen;
(c) für jede Gruppe, Überprüfen (84), ob eine Abweichung der Prädiktionsfehlervektordifferenzen der Gruppe zu der Stellvertreterprädiktionsfehlervektordifferenz eine vorbestimmte Schwelle überschreitet;
(d) für jede Gruppe, falls dies der Fall ist, Wiederholen (86) der Maßnahmen (a) - (c) für die jeweilige Gruppe;
(e) Ersetzen (88) der Prädiktionsfehlervektordifferenzen jeder Gruppe durch die Stellvertreterprädiktionsfehlervektordifferenz, um diese als die Prädiktionsfehlervektordifferenz zu verwenden, und Einbringen von Ergebnissen der Einteilung im Schritt (a) in den codierten Datenstrom.

11. Vorrichtung gemäß einem der vorhergehenden Ansprüche, bei der die Einrichtung (56) zum Codieren der Prädiktionsfehlervektordifferenzen folgende Merkmale aufweist:
eine Einrichtung (120) zum Binarisieren des Minimums der Prädiktionsfehlervektordifferenz und eines vorbestimmten Grenzwerts (s) gemäß einem ersten Binarisierungsschema, um ein Primärpräfix (144) zu erhalten;
eine Einrichtung zum, falls die vorbestimmte Prädiktionsfehlervektordifferenz größer als der Grenzwert (s) ist (122), Binarisieren (126) einer Differenz der vorbestimmten Prädiktionsfehlervektordifferenz minus dem vorbestimmten Grenzwert (s) gemäß einem zweiten Binarisierungsschema, um ein Primärsuffix (145) zu erhalten, und Anhängen (128) des Primärsuffix (145) an das Primärpräfix (144), wobei sich das erste und das zweite Binarisierungsschema unterscheiden;
eine Einrichtung (102) zum binären arithmetischen Codieren jedes Bits in einem aus dem Primärpräfix bzw. dem Primärpräfix und dem Primärsuffix bestehenden Codewort durch, falls das Bit des Codeworts Teil des Primärpräfix (144) ist (160), binäres arithmetisches Codieren (162) des Bits mittels einer adaptiv variierenden Bitwertwahrscheinlichkeitsschätzung, und falls das Bit des Codeworts Teil des Primärsuffix (145) ist (162), binäres arithmetisches Codieren (166) des Bits mittels einer statischen Bitwertwahrscheinlichkeitsschätzung.

12. Vorrichtung zum Decodieren eines codierten Datenstroms, der eine codierte Form eines Datenstroms ist, der ein zeitlich veränderliches Graphikmodell (60) darstellt, wobei der Datenstrom eine Folge von Datenabschnitten aufweist, die Koordinatendaten (m) aufweisen, die das Graphikmodell (60) zu unterschiedlichen Zeitpunkten (t) definieren, und wobei der codierte Datenstrom Prädiktionsfehlervektordifferenzen enthält, wobei die Vorrichtung folgende Merkmale aufweist:
eine Einrichtung (216, 218, 220) zum Verarbeiten des codierten Datenstroms, um decodierte Prädiktionsfehlervektordifferenzen (e(t)) zu erhalten;
eine erste Einrichtung (226) zum Prädizieren von Prädiktionsfehlervektoren (d̂(t)) für einen aktuell zu decodierenden ersten Datenabschnitt basierend auf bereits decodierten Prädiktionsfehlervektordifferenzen (e(t)), um prädizierte Prädiktionsfehlervektoren (d̂(t-1), (d̂(t))) für den ersten Datenabschnitt zu erhalten;
eine erste Einrichtung (222) zum Kombinieren der prädizierten Prädiktionsfehlervektoren (d̂(t-1), d(t)) mit Prädiktionsfehlervektordifferenzen (e (t)) des aktuell zu decodierenden ersten Datenabschnitts, um Prädiktionsfehlervektoren (d̂(t)) für den ersten Datenabschnitt zu erhalten, **gekennzeichnet durch**
eine zweite Einrichtung (230) zum Prädizieren von Koordinatendaten (m (t)) des ersten Datenabschnitts basierend auf bereits erhaltenen Koordinatendaten (m (t-1)) eines zweiten, dem ersten Datenabschnitt vorausgehenden Datenabschnitts, um prädizierte Koordinatendaten
(m̂(t-1)) für den ersten Datenabschnitt zu erhalten; und eine zweite Einrichtung (224) zum Kombinieren der prädizierten Koordinatendaten (m̂(t-1)) für den ersten Datenabschnitt mit den Prädiktionsfehlervektoren (d̂(t)) für den ersten Datenabschnitt, um die Koordinatendaten (m (t)) des ersten Datenabschnitts zu erhalten.

13. Vorrichtung gemäß Anspruch 12, bei der die erste Einrichtung (226) zum Prädizieren ausgebildet ist, um die Prädiktionsfehlervektoren (d(t)) für den ersten Datenabschnitt basierend auf denjenigen Prädiktionsfehlervektordifferenzen (ê(t-1)) für den zweiten Datenabschnitt zu prädizieren, und die zweite Einrichtung (30) zum Kombinieren ausgebildet ist, um die Kombination mit denjenigen Prädiktionsfehlervektordifferenzen (ê(t-1)) für den zweiten Datenabschnitt durchzuführen, die durch eine eindeutige Zuordnung zwischen den Prädiktionsfehlervektordifferenzen (ê(t)) des ersten Datenabschnitts und den Prädiktionsfehlervektordifferenzen (ê(t-1)) des zweiten Datenabschnitts den Prädiktionsfehlervektordifferenzen (e(t)) für den ersten Datenabschnitt zugewiesen sind.

14. Vorrichtung gemäß Anspruch 12 oder 13, bei der die zweite Einrichtung (226) zum Prädizieren ausgebildet ist, um die Prädiktion eines Teils der Prädiktionsfehlervektoren (d(t)) für den aktuell zu decodierenden ersten Datenabschnitt basierend auf bereits erhaltenen Prädiktionsfehlervektoren (d(t)) für den ersten Datenabschnitt vorzunehmen.

15. Vorrichtung gemäß einem der Ansprüche 12 bis 14, bei der die zweite Einrichtung (24) zum Prädizieren ausgebildet ist, um zur Prädiktion eines vorbestimmten Prädiktionsfehlervektors (dᵢ(t)) für den ersten Datenabschnitt
zunächst Nachbarschaftsinformationen in dem Datenstrom daraufhin zu überprüfen, ob bereits eine solche Prädiktionsfehlervektordifferenz (êⱼ(t)) der Prädiktionsfehlervektordifferenzen (êⱼ(t)) des ersten Datenabschnitts und hieraus ein prädizierter Prädiktionsfehlervektor (d̂ⱼ(t)) erhalten worden ist, die zu einer Prädiktionsfehlervektordifferenz (êᵢ(t)) eine Nachbarschaftsbeziehung aufweist, aus der der vorbestimmte Prädiktionsfehlervektor (dᵢ(t)) durch Kombination erhalten werden soll, falls eine solche Prädiktionsfehlervektordifferenz (êⱼ(t)) existiert, den aus dieser erhaltenen Prädiktionsfehlervektor dⱼ(t) zur Prädiktion des vorbestimmten Prädiktionsfehlervektors (dᵢ(t)) zu verwenden.

16. Vorrichtung gemäß einem der Ansprüche 12 bis 15, bei der die erste Einrichtung (226) zum Prädizieren ausgebildet ist, um in dem Fall, dass für einen vorbestimmten Prädiktionsfehlervektor unter den Prädiktionsfehlervektoren für den ersten Datenabschnitt mehr als ein Prädiktor vorliegt, die Prädiktion des vorbestimmten Prädiktionsfehlervektors basierend auf dem Median dieser Prädiktoren vorzunehmen.

17. Vorrichtung gemäß einem der Ansprüche 12 bis 16, bei der die Einrichtung (56) zum Codieren folgendes Merkmal aufweist:
eine Einrichtung (34) zum Vergrößern der Anzahl an Prädiktionsfehlervektordifferenzen durch
(a) Zuweisen der Prädiktionsfehlervektordifferenzen als Stellvertreterprädiktionsfehlervektordifferenzen zu Gruppen, abhängig von Einteilungsinformationen in dem kodierten Datenstrom; und
(b) Ersetzen (88) jeder Prädiktionsfehlervektordifferenz durch Gruppen von identischen Prädiktionsfehlervektordifferenzen, um diese als die Prädiktionsfehlervektordifferenz zu verwenden.

18. Vorrichtung gemäß einem der Ansprüche 12 bis 17, bei der eine vorbestimmte Prädiktionsfehlervektordifferenz in den kodierten Datenstrom **dadurch** kodiert ist, dass Bits eines Codewort, das eine Binarisierung derselben darstellt, bitweise in den kodierten Datenstrom kodiert ist, wobei das Codewort ein Primärpräfix, das eine Binarisierung eines Minimums der vorbestimmten Prädiktionsfehlervektordifferenz gemäß einem ersten Binarisierungsschema darstellt, und, falls die vorbestimmte Prädiktionsfehlervektordifferenz größer als der vorbestimmte Grenzwert ist, ein Primärsuffix aufweist, das eine Binarisierung einer Differenz der vorbestimmten Prädiktionsfehlervektordifferenz minus dem vorbestimmten Grenzwert gemäß einem zweiten Binarisierungsschema darstellt, wobei sich das erste und das zweite Binarisierungsschema unterscheiden, und wobei die Einrichtung (216) zum Verarbeiten des kodierten Datenstroms folgende Merkmale aufweist:
eine Einrichtung zum, für jedes Bit des Codeworts, falls das Bit des Codeworts Teil des Primärpräfix ist, binäres arithmetisches Decodieren des Bits mittels einer adaptiv variierenden Bitwertwahrscheinlichkeitsschätzung, und falls das Bit des Codeworts Teil des Primärsuffix ist, binäres arithmetisches Decodieren des Bits mittels einer statischen Bitwertwahrscheinlichkeitsschätzung,
um das Codewort zu erhalten;
einer Einrichtung zum Extrahieren des Minimums aus dem Primärpräfix;
einer Einrichtung zum, falls das Minimum kleiner dem vorbestimmten Grenzwert ist, Extrahieren der Differenz aus dem Primärsuffix und Addieren der Differenz zu dem vorbestimmten Grenzwert, um die vorbestimmte Prädiktionsfehlervektordifferenz zu erhalten, und, anderenfalls, Erachten des Minimums als die Prädiktionsfehlervektordifferenz.

19. Verfahren zum Codieren eines Datenstroms, der ein zeitlich veränderliches Graphikmodell (60) darstellt, wobei der Datenstrom eine Folge von Datenabschnitten aufweist, die Koordinatendaten (m) aufweisen, die das Graphikmodell (60) zu unterschiedlichen Zeitpunkten (t) definieren, mit folgenden Schritten:
Prädizieren von Koordinatendaten (m(t)) eines aktuell zu codierenden ersten Datenabschnitts basierend auf Koordinatendaten (m(t-1)) eines zweiten, dem aktuell zu codierenden ersten Datenabschnitt vorausgehenden Datenabschnitts, um prädizierte Koordinatendaten (m(t)) für den ersten Datenabschnitt zu erhalten;
Vergleichen der prädizierten Koordinatendaten (m (t)) für den ersten Datenabschnitt und der Koordinatendaten (m(t)) für den ersten Datenabschnitt, um Prädiktionsfehlervektoren (d(t)) für den aktuell zu codierenden ersten Datenabschnitt zu erhalten, **gekennzeichnet durch** Prädizieren der Prädiktionsfehlervektoren (d(t)) für den ersten Datenabschnitt basierend auf bereits erhaltenen Prädiktionsfehlervektoren (d(t-1), d(t)), um prädizierte Prädiktionsfehlervektoren (d̂(t-1), d(t))für den ersten Datenabschnitt zu erhalten; Vergleichen der prädizierten Prädiktionsfehlervektoren (d̂(t-1), d̂(t)) für den ersten Datenabschnitt und der Prädiktionsfehlervektoren (d(t)) für den ersten Datenabschnitt, um Prädiktionsfehlervektordifferenzen (e(t)) für den ersten Datenabschnitt zu erhalten; und
Verarbeiten der Prädiktionsfehlervektordifferenzen (e(t)) für den ersten Datenabschnitt, um einen Teil eines codierten Datenstroms zu erhalten.

20. Verfahren zum Decodieren eines codierten Datenstroms, der eine codierte Form eines Datenstroms ist, der ein zeitlich veränderliches Graphikmodell (60) darstellt, wobei der Datenstrom eine Folge von Datenabschnitten aufweist, die Koordinatendaten (m) aufweisen, die das Graphikmodell (60) zu unterschiedlichen Zeitpunkten (t) definieren, und wobei der codierte Datenstrom Prädiktionsfehlervektordifferenzen enthält, wobei das Verfahren folgende Schritte aufweist:
Verarbeiten des codierten Datenstroms, um decodierte Prädiktionsfehlervektordifferenzen (ê(t)) zu erhalten;
Prädizieren von Prädiktionsfehlervektoren (d(t)) für einen aktuell zu decodierenden ersten Datenabschnitt basierend auf bereits decodierten Prädiktionsfehlervektordifferenzen (e(t)), um prädizierte Prädiktionsfehlervektoren (d̂(t-1), (d (t))) für den ersten Datenabschnitt zu erhalten;
Kombinieren der prädizierten Prädiktionsfehlervektoren (d̂(t-1), d̂(t)) mit Prädiktionsfehlervektordifferenzen (e (t)) des aktuell zu decodierenden ersten Datenabschnitts, um Prädiktionsfehlervektoren (d(t)) für den ersten Datenabschnitt zu erhalten, **gekennzeichnet durch** Prädizieren von Koordinatendaten (m (t)) des ersten Datenabschnitts basierend auf bereits erhaltenen Koordinatendaten (m̂(t-1)) eines zweiten, dem ersten Datenabschnitt vorausgehenden Datenabschnitts, um prädizierte Koordinatendaten (m̂(t-1)) für den ersten Datenabschnitt zu erhalten; und Kombinieren der prädizierten Koordinatendaten (m̂(t-1)) für den ersten Datenabschnitt mit den Prädiktionsfehlervektoren (d (t)) für den ersten Datenabschnitt, um die Koordinatendaten (m (t)) des ersten Datenabschnitts zu erhalten.

21. Computer-Programm mit einem Programmcode zur Durchführung des Verfahrens nach Anspruch 19 oder 20, wenn das Computer-Programm auf einem Computer abläuft.

## Claims

1. Apparatus for encoding a data stream representing a temporally varying graphics model (60), the data stream comprising a series of data portions having coordinate data (m) defining the graphics model (60) at different time instants (t), comprising:
a first means (26) for predicting coordinate data (m(t)) of a first data portion currently to be encoded, based on coordinate data (m(t-1) of a second data portion preceding the first data portion currently to be encoded, in order to obtain predicted coordinate data (m (t)) for the first data portion;
a first means (46) for comparing the predicted coordinate data (m (t)) for the first data portion and the coordinate data (m(t)) for the first data portion, in order to obtain prediction error vectors (d(t)) for the first data portion currently to be encoded,
**characterized by** a second means (24) for predicting the prediction error vectors (d(t)) for the first data portion based on prediction error vectors (d(t-1)), d(t)) already obtained, in order to obtain predicted prediction error vectors (d̂(t-1), d̂(t)) for the first data portion; a second means (30) for comparing the predicted prediction error vectors (d̂(t-1), d̂(t)) for the first data portion and the prediction error vectors (d(t)) for the first data portion, in order to obtain prediction error vector differences (e(t)) for the first data portion; and
a means (34, 36, 56) for processing the prediction error vector differences (e(t)) for the first data portion, in order to obtain part of an encoded data stream.

2. Apparatus according to claim 1, wherein the first means (26) for predicting and the first means for comparing are formed to predict the coordinate data (m(t-1)) of the second data portion based on coordinate data (m(t-2)) of a third data portion preceding the second data portion in order to obtain predicted coordinate data ((m̂(t-1)) for the second data portion, and to compare the predicted coordinate data ((m̂(t)) for the second data portion and the coordinate data (m(t-1)) of the second data portion in order to obtain prediction error vectors (d(t-1)) for the second data portion, and wherein the second means (42) for predicting is formed to predict the prediction error vectors (d(t)) for the first data portion based on the prediction error vectors (d(t-1)) for the second data portion.

3. Apparatus according to claim 2, further comprising: a means (54) for checking whether there is unique association between the coordinate data (m(t)) of the first data portion currently to be encoded and the coordinate data (m(t-1)) of the second data portion, and causing, if this is not the case, the coordinate data (m(t)) of the data portion currently to be encoded to be encoded (16) immediately without prediction, and predictions to be performed on coordinate data (m(t+1)) of data portions following the first data portion not based on coordinate data of data portions before the first data portion.

4. Apparatus according to claim 2 or 3, wherein the second means (24) for predicting is formed to predict the prediction error vectors (d(t)) for the first data portion based on those prediction error vectors (d(t-1)) for the second data portion, and the second means (30) for comparing is formed to perform the comparison with those prediction error vectors (d(t-1)) for the second data portion that are assigned to the prediction error vectors (d(t)) for the first data portion by a unique association between the coordinate data (m(t)) of the first data portion and the coordinate data (m(t-1)) of the second data portion.

5. Apparatus according to one of the preceding claims, in which the second means (24) for predicting is formed to perform the prediction of a part of the prediction error vectors (d(t)) for the first data portion currently to be encoded based on already-obtained prediction error vectors (d(t)) for the first data portion.

6. Apparatus according to one of the preceding claims, wherein the second means (24) for predicting is formed, for the prediction of a predetermined prediction error vector (dᵢ(t)) for the first data portion, to at first check neighborhood information in the data stream as to whether predicted coordinate information (m̂ⱼ(t)), and from this, in turn, a prediction error vector (dⱼ(t)), has already been obtained for such coordinate information (mⱼ(t)) of the coordinate data of the first data portion, which has a neighborhood relation to coordinate information (mᵢ(t)), for which predicted coordinate information (m̂ᵢ(t)) has been obtained, from which, in turn, the predetermined prediction error vector (dᵢ(t)) has been obtained, if such coordinate information (mⱼ(t)) exists, use the prediction error vector (dⱼ(t) for the prediction of the predetermined prediction error vector (dᵢ(t)), which has been obtained from the predicted coordinate information (m̂ⱼ(t)) for such coordinate information (mⱼ(t)).

7. Apparatus according to one of the preceding claims, wherein the second means (24) for predicting is formed to perform, in case more than one predictor is present for a predetermined prediction error vector (dᵢ(t)) among the prediction error vectors for the first data portion, the prediction of the predetermined prediction error vector based on the median of these predictors.

8. Apparatus according to one of the preceding claims, further comprising:
a means (54) for checking whether the prediction error vectors (d(t)) violate a predetermined criterion, and if this is the case, cause the coordinate data (m(t)) of the first data portion to be encoded (16) immediately without prediction, and predictions performed on coordinate data of data portions following the first data portion to be performed not based on coordinate data of data portions before the first data portion.

9. Apparatus according to one of the preceding claims, wherein the means (56) for encoding comprises:
a means (36) for quantizing the prediction error vector differences (e(t)).

10. Apparatus according to one of the preceding claims, wherein the means (56) for encoding comprises:
a means (34) for decimating a number of prediction error vector differences by
(a) classifying (80) the prediction error vector differences into groups, depending on the coordinate information for which that prediction error vector for which the respective prediction error vector difference was determined was obtained, or on neighborhood information in the data stream;
(b) determining (82) a substitute prediction error vector difference for each group of prediction error vector differences;
(c) for each group, checking (84) whether a deviation of the prediction error vector differences of the group to the substitute prediction error vector difference exceeds a predetermined threshold;
(d) for each group, if this is the case, repeating (86) the measures (a) - (c) for the respective group;
(e) replacing (88) the prediction error vector differences of each group with the substitute prediction error vector difference, in order to use this as the prediction error vector difference, and introducing results of the classification in the step (a) into the encoded data stream.

11. Apparatus according to one of the preceding claims, wherein the means (56) for encoding the prediction error vector differences comprises:
a means (120) for binarizing the minimum of the prediction error vector difference and a predetermined boundary value (s) according to a first binarization scheme in order to obtain a primary prefix (144);
a means for binarizing (126) a difference of the predetermined prediction error vector difference minus the predetermined boundary value (s) according to a second binarization scheme if the predetermined prediction error vector difference is greater than the boundary value (s) (122), in order to obtain a primary suffix (145), and appending (128) the primary suffix (145) to the primary prefix (144), wherein the first and second binarization schemes are different;
a means (102) for binarily arithmetically encoding each bit in a codeword consisting of the primary prefix or the primary prefix and the primary suffix by, if the bit of the codeword is part of the primary prefix (144) (160), binarily arithmetically encoding (162) the bit by means of an adaptively-varying bit value probability estimation, and if the bit of the codeword is part of the primary suffix (145) (162), binarily arithmetically encoding (166) the bit by means of a static bit value probability estimation.

12. Apparatus for decoding an encoded data stream, which is an encoded form of a data stream representing a temporally varying graphics model (60), the data stream comprising a series of data portions having coordinate data (m) defining the graphics model (60) at different time instants (t), and the encoded data stream containing prediction error vector differences, the apparatus comprising:
a means (216, 218, 220) for processing the encoded data stream in order to obtain decoded prediction error vector differences (ê(t));
a first means (226) for predicting prediction error vectors (d̂(t)) for a first data portion currently to be decoded, based on already-decoded prediction error vector differences (ê(t)), in order to obtain predicted prediction error vectors (d̂(t-1), (d̂(t)) for the first data portion;
a first means (222) for combining the predicted prediction error vectors (d̂(t-1), d̂(t)) with prediction error vector differences (ê(t)) of the first data portion currently to be decoded, in order to obtain prediction error vectors (d̂(t)) for the first data portion, **characterized by**
a second means (230) for predicting coordinate data (m̂(t)) of the first data portion based on already-obtained coordinate data (m̂(t-1)) of a second data portion preceding the first data portion, in order to obtain predicted coordinate data (m̂(t-1)) for the first data portion; and
a second means (224) for combining the predicted coordinate data (m̂(t-1)) for the first data portion with the prediction error vectors (d̂(t)) for the first data portion, in order to obtain the coordinate data (m̂(t)) of the first data portion.

13. Apparatus according to claim 12, wherein the first means (226) for predicting is formed to predict the prediction error vectors (d̂(t)) for the first data portion based on those prediction error vector differences (ê(t-1)) for the second data portion, and the second means (30) for combining is formed to perform the combination with those prediction error vector differences (ê(t-1)) for the second data portion that are assigned to the prediction error vector differences (ê(t)) for the first data portion by a unique association between the prediction error vector differences (ê(t)) of the first data portion and the prediction error vector differences (ê(t-1)) of the second data portion.

14. Apparatus according to claim 12 or 13, wherein the second means (226) for predicting is formed to perform the prediction of a part of the prediction error vectors (d(t)) for the first data portion currently to be decoded, based on already-obtained prediction error vectors (d(t)) for the first data portion.

15. Apparatus according to one of claims 12 to 14, wherein the second means (24) for predicting is formed, for the prediction of a predetermined prediction error vector (dᵢ(t)) for the first data portion, to at first check neighborhood information in the data stream as to whether such a prediction error vector difference (êⱼ(t)) of the prediction error vector differences (êⱼ(t)) of the first data portion, and a predicted prediction error vector (d̂ⱼ(t)) therefrom, has already been obtained, which has a neighborhood relation to a prediction error vector difference (êᵢ(t)), from which the predetermined prediction error vector (dᵢ(t)) is to be obtained by a combination, if such a prediction error vector difference (êⱼ(t)) exists, use the prediction error vector (dⱼ(t)) obtained therefrom for the prediction of the predetermined prediction error vector (dᵢ(t)).

16. Apparatus according to one of claims 12 to 15, wherein the first means (226) for predicting is formed to perform, in case more than one predictor is present for a predetermined prediction error vector among the prediction error vectors for the first data portion, the prediction of the predetermined prediction error vector based on the median of these predictors.

17. Apparatus according to one of claims 12 to 16, wherein the means (56) for encoding comprises:
a means (34) for enlarging the number of prediction error vector differences by
(a) assigning the prediction error vector differences as substitute prediction error vector differences to groups, depending on classification information in the encoded data stream; and
(b) replacing (88) each prediction error vector difference with groups of identical prediction error vector differences so as to use these as the prediction error vector differences.

18. Apparatus according to one of claims 12 to 17, wherein a predetermined prediction error vector difference is encoded into the encoded data stream by encoding bits of a codeword representing a binarization thereof bit-by-bit into the encoded data stream, wherein the codeword comprises a primary prefix, which represents a binarization of a minimum of the predetermined prediction error vector difference according to a first binarization scheme, and, if the predetermined prediction error vector difference is greater than the predetermined boundary value, a primary suffix, which represents a binarization of a difference of the predetermined prediction error vector difference minus the predetermined boundary value according to a second binarization scheme, with the first and second binarization schemes being different, and the means (216) for processing the encoded data stream comprising:
a means for, for each bit of the codeword, if the bit of the codeword is part of the primary prefix, binarily arithmetically decoding the bit by means of an adaptively varying bit value probability estimation, and if the bit of the codeword is part of the primary suffix, binarily arithmetically decoding the bit by means of a static bit value probability estimation,
in order to obtain the codeword;
a means for extracting the minimum from the primary prefix;
a means for extracting the difference from the primary suffix and adding the difference to the predetermined boundary value if the minimum is smaller than the predetermined boundary value, in order to obtain the predetermined prediction error vector difference, and otherwise regarding the minimum to be the prediction error vector difference.

19. Method for encoding a data stream representing a temporally varying graphics model (60), the data stream comprising a series of data portions having coordinate data (m) defining the graphics model (60) at different time instants (t), comprising the steps of:
predicting coordinate data (m(t)) of a first data portion currently to be encoded, based on coordinate data (m(t-1) of a second data portion preceding the first data portion currently to be encoded, in order to obtain predicted coordinate data (m̂(t)) for the first data portion;
comparing the predicted coordinate data (m̂(t)) for the first data portion and the coordinate data (m(t)) for the first data portion, in order to obtain prediction error vectors (d(t)) for the first data portion currently to be encoded, **characterized by**
predicting the prediction error vectors (d(t)) for the first data portion based on prediction error vectors (d(t-1)), d(t)) already obtained, in order to obtain predicted prediction error vectors (d̂(t-1), d̂(t)) for the first data portion;
comparing the predicted prediction error vectors (d̂(t-1), d̂(t)) for the first data portion and the prediction error vectors (d(t)) for the first data portion, in order to obtain prediction error vector differences (e(t)) for the first data portion; and
processing the prediction error vector differences (e(t)) for the first data portion, in order to obtain part of an encoded data stream.

20. Method for decoding an encoded data stream, which is an encoded form of a data stream representing a temporally varying graphics model (60), the data stream comprising a series of data portions having coordinate data (m) defining the graphics model (60) at different time instants (t), and the encoded data stream containing prediction error vector differences, the method comprising the steps of:
processing the encoded data stream in order to obtain decoded prediction error vector differences (ê(t));
predicting prediction error vectors (d̂(t)) for a first data portion currently to be decoded, based on already-decoded prediction error vector differences (ê(t)), in order to obtain predicted prediction error vectors (d̂(t-1), (d̂(t)) for the first data portion;
combining the predicted prediction error vectors (d̂(t-1), d̂(t)) with prediction error vector differences (ê(t)) of the first data portion currently to be decoded, in order to obtain prediction error vectors (d̂(t)) for the first data portion, **characterized by**
predicting coordinate data (m̂(t)) of the first data portion based on already-obtained coordinate data (m̂(t-1)) of a second data portion preceding the first data portion, in order to obtain predicted coordinate data (m̂(t-1)) for the first data portion; and
combining the predicted coordinate data (m̂(t-1)) for the first data portion with the prediction error vectors (d̂(t)) for the first data portion, in order to obtain the coordinate data (m̂(t)) of the first data portion.

21. Computer program with a program code for performing the method according to claim 19 or 20, when the computer program is executed on a computer.

## Revendications

1. Dispositif de codage d'un flux de données représentant un modèle graphique variable dans le temps (60), le flux de données présentant une succession de segments de données présentant des données de coordonnées (m) définissant le modèle graphique (60) à des moments différents (t), aux caractéristiques suivantes:
un premier moyen (26) destiné à prédire des données de coordonnées (m(t)) d'un premier segment de données actuellement à coder sur base de données de coordonnées (m(t-1)) d'un deuxième segment de données précédant le premier segment de données actuellement à coder, pour obtenir des données de coordonnées prédites (*m̂*(*t*)) pour le premier segment de données;
un premier moyen (46) destiné à comparer les données de coordonnées prédites (*m̂*(*t*)) pour le premier segment de données et les données de coordonnées (m(t)) pour le premier segment de données, pour obtenir des vecteurs d'erreur de prédiction (d(t)) pour le premier segment de données actuellement à coder; **caractérisé par**
un deuxième moyen (24) destiné à prédire les vecteurs d'erreur de prédiction (d(t)) pour le premier segment de données sur base de vecteurs d'erreur de prédiction (d(t-1), d(t)) déjà obtenus, pour obtenir des vecteurs d'erreur de prédiction prédits (*d̂*(*t-*1), *d̂*(*t*))*,* pour le premier segment de données;
un deuxième moyen (30) destiné à comparer les vecteurs d'erreur de prédiction prédits (*d̂*(*t-*1), *d̂*(*t*)) pour le premier segment de données et les vecteurs d'erreur de prédiction (d(t)) pour le premier segment de données, pour obtenir des différences de vecteur d'erreur de prédiction (e(t)) pour le premier segment de données; et
un moyen (34, 36, 56) destiné à traiter les différences de vecteur d'erreur de prédiction (e(t)) pour le premier segment de données, pour obtenir une partie d'un flux de données codé.

2. Dispositif selon la revendication 1, dans lequel le premier moyen (26) destiné à prédire et le premier moyen destiné à comparer sont réalisés de manière à prédire les données de coordonnées (m(t-1)) du deuxième segment de données sur base de données de coordonnées (m(t-2)) d'un troisième segment de données précédant le deuxième segment de données, pour obtenir des données de coordonnées prédites (*m̂*(*t*-1)) pour le deuxième segment de données, et pour comparer les données de coordonnées prédites (*m̂*(*t*)) pour le deuxième segment de données et les données de coordonnées (m(t-1)) du deuxième segment de données, pour obtenir des vecteurs d'erreur de prédiction (d(t-1)) pour le deuxième segment de données, et le deuxième moyen (42) destiné à prédire étant réalisé de manière à prédire les vecteurs d'erreur de prédiction (d(t)) pour le premier segment de données sur base des vecteurs d'erreur de prédiction (d(t-1)) pour le deuxième segment de données.

3. Dispositif selon la revendication 2, présentant par ailleurs la caractéristique suivante: un moyen (54) destiné à vérifier s'il existe, entre les données de coordonnées (m(t)) du premier segment de données actuellement à coder et les données de coordonnées (m(t-1)) du deuxième segment de données, une association univoque, et provoquer, si cela n'est pas le cas, que les données de coordonnées (m(t)) du segment de données actuellement à coder sans prédiction soient immédiatement codées (16), et que les prédictions qui sont effectuées sur des données de coordonnées (m(t+1) de segments de données suivant le premier segment de données ne soient pas réalisées sur base de données de coordonnées de segments de données avant le premier segment de données.

4. Dispositif selon la revendication 2 ou 3, dans lequel le deuxième moyen (24) destiné à prédire est réalisé de manière à prédire les vecteurs d'erreur de prédiction (d(t)) pour le premier segment de données sur base des vecteurs d'erreur de prédiction (d(t-1) pour le deuxième segment de données, et le deuxième moyen (30) destiné à comparer est réalisé de manière à effectuer la comparaison avec les vecteurs d'erreur de prédiction (d(t-1)) pour le deuxième segment de données qui sont associés, par une association univoque entre les données de coordonnées (m(t)) du premier segment de données et les données de coordonnées (m(t-1)) du deuxième segment de données, aux vecteurs d'erreur de prédiction (d(t)) pour le premier segment de données.

5. Dispositif selon l'une des revendications précédentes, dans lequel le deuxième moyen (24) destiné à prédire est réalisé de manière à procéder à la prédiction d'une partie des vecteurs d'erreur de prédiction (d(t)) pour le premier segment de données actuellement à coder sur base de vecteurs d'erreur de prédiction (d(t)) déjà obtenus pour le premier segment de données.

6. Dispositif selon l'une des revendications précédentes, dans lequel le deuxième moyen (24) destiné à prédire est réalisé de manière à, pour la prédiction d'un vecteur d'erreur de prédiction prédéterminé (dᵢ(t)) pour le premier segment de données, tout d'abord vérifier des informations de voisinage dans le flux de données, pour savoir s'il a déjà été obtenu, pour une telle information de coordonnées (mj(t)) des données de coordonnées du premier segment de données, une information de coordonnées prédite (*m̂ⱼ*(*t*)) et, à partir de celle-ci, à nouveau un vecteur d'erreur de prédiction (dj(t)) qui présente, avec une information de coordonnées (mi(t)), un rapport de voisinage pour lequel a été obtenue une information de coordonnées prédite (*m̂ᵢ*(*t*)) à partir de laquelle a été obtenu, à son tour, le vecteur d'erreur de prédiction prédéterminé (dᵢ(t)),
s'il existe une telle information de coordonnées (mj(t)), utiliser le vecteur d'erreur de prédiction dj(t) pour la prédiction du vecteur d'erreur de prédiction prédéterminé (dᵢ(t)) qui a été obtenu à partir de l'information de coordonnées prédite (*m̂ⱼ*(*t*)) pour la telle information de coordonnées (mj(t)).

7. Dispositif selon l'une des revendications précédentes, dans lequel le deuxième moyen (24) destiné à prédire est réalisé de manière à procéder, au cas où il est présent, pour un vecteur d'erreur de prédiction prédéterminé (dᵢ(t)) parmi les vecteurs d'erreur de prédiction pour le premier segment de données, plus d'un prédicteur, à la prédiction du vecteur d'erreur de prédiction prédéterminé sur base de la médiane de ces prédicteurs.

8. Dispositif selon l'une des revendications précédentes, présentant par ailleurs la caractéristique suivante:
un moyen (54) destiné à vérifier si les vecteurs d'erreur de prédiction (d(t)) enfreignent un critère prédéterminé et, si cela est le cas, à provoquer que les données de coordonnées (m(t)) du premier segment de données sans prédiction soient codées immédiatement (16), et que les prédictions effectuées sur les données de coordonnées de segments de données suivant le premier segment de données ne soient pas effectuées sur base de données de coordonnées de segments de données avant le
premier segment de données.

9. Dispositif selon l'une des revendications précédentes, dans lequel le moyen (56) destiné à coder présente la caractéristique suivante:
un moyen (36) destiné à quantifier les différences de vecteur d'erreur de prédiction (e(t)).

10. Dispositif selon l'une des revendications précédentes, dans lequel le moyen (56) destiné à coder présente la caractéristique suivante:
un moyen (34) destiné à décimer le nombre de différences de vecteur d'erreur de prédiction par le fait de
(a) subdiviser (80) les différences de vecteur d'erreur de prédiction en groupes, en fonction des informations de coordonnées pour lesquelles a été obtenu le vecteur d'erreur de prédiction pour lequel a été déterminée la différence de vecteur d'erreur de prédiction respective, ou d'informations de voisinage dans le flux de données;
(b) déterminer (82) une différence de vecteur d'erreur de prédiction de substitution pour chaque groupe de différences de vecteur d'erreur de prédiction;
(c) pour chaque groupe, vérifier (84) si un écart entre les différences de vecteur d'erreur de prédiction du groupe et la différence de vecteur d'erreur de prédiction de substitution excède un seuil prédéterminé;
(d) pour chaque groupe, si cela est le cas, répéter (86) les mesures (a) à (c) pour le groupe respectif;
(e) remplacer (88) les différences de vecteur d'erreur de prédiction de chaque groupe par la différence de vecteur d'erreur de prédiction de substitution, pour utiliser celle-ci comme différence de vecteur d'erreur de prédiction, et introduire les résultats de la division à l'étape (a) dans le flux de données codé.

11. Dispositif selon l'une des revendications précédentes, dans lequel le moyen (56) destiné à coder les différences de vecteur d'erreur de prédiction présente les caractéristiques suivantes:
un moyen (120) destiné à binariser le minimum de la différence de vecteur d'erreur de prédiction et un valeur limite prédéterminée (s) selon un premier schéma de binarisation, pour obtenir un préfixe primaire (144);
un moyen destiné à binariser (126), si la différence de vecteur d'erreur de prédiction prédéterminée est supérieure à la valeur limite (s) (122), une différence de la différence de vecteur d'erreur de prédiction prédéterminée moins la valeur limite prédéterminée (s) selon un deuxième schéma de binarisation, pour obtenir un suffixe primaire (145), et à accrocher (128) le suffixe primaire (145) au préfixe primaire (144), le premier et le deuxième schéma de binarisation étant différents;
un moyen (102) destiné au codage arithmétique binaire de chaque bit dans un mot de code composé du préfixe primaire ou du préfixe primaire et du suffixe primaire par, si le bit du mot de code fait partie du préfixe primaire (144) (160), codage arithmétique binaire (162) du bit au moyen d'une estimation de probabilité de valeur de bit variable de manière adaptative, et si le bit du mot de code fait partie du suffixe primaire (145) (162), codage arithmétique binaire (166) du bit au moyen d'une estimation de probabilité de valeur de bit statique.

12. Dispositif de décodage d'un flux de données codé qui est une forme codée d'un flux de données représentant un modèle graphique variable dans le temps (60), le flux de données présentant une succession de segments de données présentant des données de coordonnées (m) définissant le modèle graphique (60) à des moments différents (t), et le flux de données codé contenant des différences de vecteur d'erreur de prédiction, le dispositif présentant les caractéristiques suivantes:
un moyen (216, 218, 220) destiné à traiter le flux de données codé, pour obtenir des différences de vecteur d'erreur de prédiction décodées (*ê*(*t*));
un premier moyen (226) destiné à prédire des vecteurs d'erreur de prédiction (*d̂*(*t*)) pour un premier segment de données actuellement à décoder sur base de différences de vecteur d'erreur de prédiction déjà décodées (*ê*(*t*)), pour obtenir des vecteurs d'erreur de prédiction prédits (*d̂*(*t*-1)), (*d̂*(*t*)) pour le premier segment de données;
un premier moyen (222) destiné à combiner les vecteurs d'erreur de prédiction prédits (*d̂*(*t*-1), *d̂*(*t*)) avec les différences de vecteur d'erreur de prédiction (*ê*(*t*)) du premier segment de données actuellement à décoder, pour obtenir des vecteurs d'erreur de prédiction (*d̂*(*t*)) pour le premier segment de données,
**caractérisé par** un deuxième moyen (230) destiné à prédire les données de coordonnées (*m̂*(*t*)) du premier segment de données sur base des données de coordonnées (*m̂*(*t*-1)) déjà obtenues d'un deuxième segment de données précédant le premier segment de données, pour obtenir des données de coordonnées prédites (*m̂*(*t*-1)) pour le premier segment de données; et un deuxième moyen (224) destiné à combiner les données de coordonnées prédites (*m̂*(*t*-1)) pour le premier segment de données avec les vecteurs d'erreur de prédiction (*d̂*(*t*)) pour le premier segment de données, pour obtenir les données de coordonnées (*m̂*(*t*)) du premier segment de données.

13. Dispositif selon la revendication 12, dans lequel le premier moyen (226) destiné à prédire est réalisé de manière à prédire les vecteurs d'erreur de prédiction (*d̂*(*t*)) pour le premier segment de données sur base des différences de vecteur d'erreur de prédiction (*ê*(*t*-1)) pour le deuxième segment de données, et le deuxième moyen (30) destiné à combiner est réalisé de manière à réaliser la combinaison avec les différences de vecteur d'erreur de prédiction (*ê*(*t*-1)) pour le deuxième segment de données qui sont attribuées, par une association univoque entre les différences de vecteur d'erreur de prédiction (*ê*(*t*)) du premier segment de données et les différences de vecteur d'erreur de prédiction (*ê*(*t*-1)) du deuxième segment de données, aux différences de vecteur d'erreur de prédiction (*ê*(*t*)) pour le premier segment de données.

14. Dispositif selon la revendication 12 ou 13, dans lequel le deuxième moyen (226) destiné à prédire est réalisé de manière à procéder à la prédiction d'une partie des vecteurs d'erreur de prédiction (d(t)) pour le premier segment de données actuellement à décoder sur base de vecteurs d'erreur de prédiction (d(t)) déjà obtenus pour le premier segment de données.

15. Dispositif selon l'une des revendications 12 à 14, dans lequel le deuxième moyen (24) destiné à prédire est réalisé de manière à, pour la prédiction d'un vecteur d'erreur de prédiction prédéterminé (dᵢ(t)) pour le premier segment de données tout d'abord vérifier les informations de voisinage dans le flux de données, pour savoir s'il a déjà été obtenu une telle différence de vecteur d'erreur de prédiction (*êⱼ*(*t*)) parmi les différences de vecteur d'erreur de prédiction (*êⱼ*(*t*)) du premier segment de données et, à partir de cette dernière, un vecteur d'erreur de prédiction (*d̂ⱼ*(*t*)) qui présente, avec une différence de vecteur d'erreur de prédiction (*êᵢ*(*t*)), un rapport de voisinage à partir duquel doit être obtenu par combinaison le vecteur d'erreur de prédiction prédéterminé (dᵢ(t)), s'il existe une telle différence de vecteur d'erreur de prédiction (*êⱼ*(*t*)), utiliser le vecteur d'erreur de prédiction dⱼ(t) pour la prédiction du vecteur d'erreur de prédiction prédéterminé (dᵢ(t)).

16. Dispositif selon l'une des revendications 12 à 15, dans lequel le premier moyen (226) destiné à prédire est réalisé de manière à procéder, au cas où il est présent, pour un vecteur d'erreur de prédiction prédéterminé parmi les vecteurs d'erreur de prédiction pour le premier segment de données, plus d'un prédicteur, à la prédiction du vecteur d'erreur de prédiction prédéterminé sur base de la médiane de ces prédicteurs.

17. Dispositif selon l'une des revendications 12 à 16, dans lequel le moyen (56) destiné à coder présente la caractéristique suivante:
un moyen (34) destiné à augmenter le nombre de différences de vecteur d'erreur de prédiction par le fait de
(a) attribuer les différences de vecteur d'erreur de prédiction comme différences de vecteur d'erreur de prédiction de substitution à des groupes, en fonction des informations de division dans le flux de données codé; et
(b) remplacer (88) chaque différence de vecteur d'erreur de prédiction par des groupes de différences de vecteur d'erreur de prédiction identiques, pour utiliser ceux-ci comme différence de vecteur d'erreur de prédiction.

18. Dispositif selon l'une des revendications 12 à 17, dans lequel une différence de vecteur d'erreur de prédiction prédéterminée dans le flux de données codé est codée par le fait que les bits d'un mot de code représentant une binarisation de celui-ci sont codés par bit dans le flux de données codé, le mot de code représentant un préfixe primaire représentant une binarisation d'un minimum de la différence de vecteur d'erreur de prédiction prédéterminée selon un premier schéma de binarisation et, au cas où la différence de vecteur d'erreur de prédiction prédéterminée est supérieure à la valeur limite prédéterminée, présentant un suffixe primaire représentant une binarisation d'une différence de la différence de vecteur d'erreur de prédiction prédéterminée moins la valeur limite prédéterminée selon un deuxième schéma de binarisation, le premier et le deuxième schéma de binarisation étant différents, et le moyen (216) destiné à traiter le flux de données codé présentant les caractéristiques suivantes:
un moyen destiné, pour chaque bit du mot de code, au cas où le bit du mot de code fait partie du préfixe primaire, au décodage arithmétique binaire du bit au moyen d'une estimation de probabilité de valeur de bit variable de manière adaptative, et au cas où le bit du mot de code fait partie du suffixe primaire, au décodage binaire du bit au moyen d'une estimation de probabilité de valeur de bit statique,
pour obtenir le mot de code;
un moyen destiné à extraire le minimum du préfixe primaire;
un moyen destiné à extraire, si le minimum est inférieur à la valeur limite prédéterminée, la différence du suffixe primaire et à additionner la différence à la valeur limite prédéterminée, pour obtenir la différence de vecteur d'erreur de prédiction prédéterminée et, dans le cas contraire, estimer le minimum comme différence de vecteur d'erreur de prédiction.

19. Procédé de codage d'un flux de données représentant un modèle graphique variable dans le temps (60), le flux de données présentant une succession de segments de données présentant des données de coordonnées (m) définissant le modèle graphique (60) à des moments différents (t), aux étapes suivantes consistant à:
prédire des données de coordonnées (m(t)) d'un premier segment de données actuellement à coder sur base de données de coordonnées (m(t-1)) d'un deuxième segment de données précédant le premier segment de données actuellement à coder, pour obtenir des données de coordonnées prédites (*m̂*(*t*)) pour le premier segment de données;
comparer les données de coordonnées prédites (*m̂*(*t*)) pour le premier segment de données et les données de coordonnées (m(t)) pour le premier segment de données, pour obtenir des vecteurs d'erreur de prédiction (d(t)) pour le premier segment de données actuellement à coder;
**caractérisé par** le fait de prédire les vecteurs d'erreur de prédiction (d(t)) pour le premier segment de données sur base de vecteurs d'erreur de prédiction (d(t-1), d(t)) déjà obtenus, pour obtenir des vecteurs d'erreur de prédiction prédits (*d̂*(*t*-1), *d̂*(*t*)) pour le premier segment de données;
comparer les vecteurs d'erreur de prédiction prédits (*d̂*(*t*-1), *d̂*(*t*)) pour le premier segment de données et les vecteurs d'erreur de prédiction (d(t)) pour le premier segment de données, pour obtenir des différences de vecteur d'erreur de prédiction (e(t)) pour le premier segment de données; et traiter les différences de vecteur d'erreur de prédiction (e(t)) pour le premier segment de données, pour obtenir une partie d'un flux de données codé.

20. Procédé de décodage d'un flux de données codé qui est une forme codée d'un flux de données représentant un modèle graphique variable dans le temps (60), le flux de données présentant une succession de segments de données présentant des données de coordonnées (m) définissant le modèle graphique (60) à des moments différents (t), et le flux de données codé contenant des différences de vecteur d'erreur de prédiction, le procédé présentant les étapes suivantes consistant à:
traiter le flux de données codé, pour obtenir des différences de vecteur d'erreur de prédiction décodées (*ê*(*t*));
prédire des vecteurs d'erreur de prédiction (*d̂*(*t*)) pour un premier segment de données actuellement à décoder sur base de différences de vecteur d'erreur de prédiction déjà décodées (*ê*(*t*)), pour obtenir des vecteurs d'erreur de prédiction prédits (*d̂*(*t*-1), *d̂*(*t*)) pour le premier segment de données;
combiner les vecteurs d'erreur de prédiction prédits (*d̂*(*t*-1), *d̂*(*t*)) avec les différences de vecteur d'erreur de prédiction (*ê*(*t*)) du premier segment de données actuellement à décoder, pour obtenir des vecteurs d'erreur de prédiction (*d̂*(*t*)) pour le premier segment de données,
**caractérisé par** le fait de prédire les données de coordonnées (*m̂*(*t*)) du premier segment de données sur base des données de coordonnées (*m̂*(*t*-1))déjà obtenues d'un deuxième segment de données précédant le premier segment de données, pour obtenir des données de coordonnées prédites (*m̂*(*t*-1)) pour le premier segment de données; et combiner les données de coordonnées prédites (*m̂*(*t*-1)) pour le premier segment de données avec les vecteurs d'erreur de prédiction (*d̂*(*t*)) pour le premier segment de données, pour obtenir les données de coordonnées (*m̂*(*t*)) du premier segment de données.

21. Programme d'ordinateur avec un code de programme pour réaliser le procédé selon la revendication 19 ou 20 lorsque le programme d'ordinateur est exécuté sur un ordinateur.
